(19) Europäisches Patentamt
European Patent Office
Office européen des brevets

(11) EP 2 068 195 B1

(12) **FASCICULE DE BREVET EUROPEEN**

(45) Date de publication et mention de la délivrance du brevet:
**14.04.2010 Bulletin 2010/15**

(51) Int Cl.:
***G02F 1/139*** *(2006.01)*

(21) Numéro de dépôt: **07291466.6**

(22) Date de dépôt: **06.12.2007**

(54) **Procédé de fabrication d'une cellule d'affichage bistable a cristal liquide**

Verfahren zur Herstellung einer bistabilen Flüssigkristallzelle

Manufacturing method of a bistable liquid crystal display cell

(84) Etats contractants désignés:
**AT BE BG CH CY CZ DE DK EE ES FI FR GB GR HU IE IS IT LI LT LU LV MC MT NL PL PT RO SE SI SK TR**

(43) Date de publication de la demande:
**10.06.2009 Bulletin 2009/24**

(73) Titulaire: **Nemoptic**
**78114 Magny-Les-Hameaux (FR)**

(72) Inventeurs:
- **Vassili, V. Sergan**
  **Carmichael, CA 95608 (US)**
- **Perny, Sebastien**
  **75015 Paris (FR)**
- **Faget, Luc**
  **92350 Le Plessis Robinson (FR)**
- **Dozov, Ivan**
  **91400 Orsay (FR)**

(56) Documents cités:
**WO-A-03/019278 US-A- 6 061 107**

- **CHEPELEVA ET AL.: "Photochemical transformations of 2-arylidene-menthanones - Chiral dopants for liquid crystalline systems" PROC SPIE INT SOC OPT ENG; PROCEEDINGS OF SPIE - THE INTERNATIONAL SOCIETY FOR OPTICAL ENGINEERING 2003, vol. 5257, 30 septembre 2002 (2002-09-30), pages 71-76, XP002471676**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne le domaine des afficheurs à cristaux liquides.

Plus précisément, la présente invention concerne les afficheurs bistables à cristaux liquides nématiques. Elle s'applique en particulier aux afficheurs bistables à cristaux liquides nématiques dont deux textures stables diffèrent par une torsion d'environ 180°.

Le but de la présente invention est d'améliorer les performances des dispositifs d'affichage bistable. En particulier l'invention a pour but d'améliorer, par l'utilisation de nouveaux moyens, la bistabilité des textures dans les pixels et avantageusement le control durable de la texture dans les inter-pixels et d'autres zones non adressées.

L'invention concerne plus particulièrement un procédé de fabrication d'un tel afficheur à cristal liquide.

## ETAT DE LA TECHNIQUE

Les afficheurs à cristaux liquides les plus répandus utilisent un cristal liquide de type nématique. Ils sont constitués d'une couche de cristal liquide placée entre deux lames. Chaque lame comporte un substrat, souvent en verre, sur lequel ont été déposées une électrode conductrice puis une couche dite d'ancrage également appelée couche d'alignement. La couche d'ancrage exerce, sur les molécules de cristal liquide voisines, un couple de rappel qui tend à les orienter parallèlement à une direction nommée axe facile. Les couches d'ancrage sont souvent réalisées par un dépôt de polymère, brossé pour créer la direction de l'axe facile. Celle-ci est le plus souvent très proche de la direction de brossage.

L'épaisseur de la cellule ainsi constituée est rendue constante en répartissant, entre les lames, des billes dont le diamètre est égal à l'épaisseur souhaitée (typiquement de 1 à 6 $\mu$m).

La plupart des dispositifs à base de cristaux liquides proposés et réalisés à ce jour sont monostables. En l'absence de champ électrique, le cristal liquide est orienté selon une seule texture. Elle correspond à un minimum absolu de l'énergie élastique du cristal liquide dans la cellule, compte tenu des ancrages sur les deux lames. Sous champ électrique, cette texture est déformée continûment et ses propriétés optiques varient en fonction de la tension appliquée. Près des lames, les couches d'ancrage dites "couches d'ancrage fort" maintiennent la direction des molécules. Leur direction varie peu. A la coupure du champ, le nématique est rappelé par les ancrages sur les deux lames. Il revient selon la texture stable. Le dispositif est monostable. L'homme de l'art reconnaîtra le mode de fonctionnement des afficheurs nématiques les plus répandus : nématiques tordus (TN), supertordus (STN), à biréfringence électriquement contrôlée (ECB), nématiques verticalement alignés (VAN), etc. Au niveau de l'adressage, ces afficheurs peuvent être adressés directement (très faible résolution), en mode multiplexé (résolution moyenne) ou en mode actif (haute résolution).

### État de la technologie des afficheurs bistables:

Une nouvelle génération d'afficheurs nématiques, dits "bistables", est apparue depuis quelques années : ils fonctionnent par commutation entre deux états, stables en l'absence de champ électrique. Le champ électrique externe n'est appliqué que pendant le temps nécessaire pour faire commuter d'un état à l'autre la texture du cristal liquide. En l'absence de signal électrique de commande, l'afficheur reste en l'état obtenu. Par son principe de fonctionnement, ce type d'afficheur consomme une énergie proportionnelle au nombre de changements d'images. Ainsi, quand la fréquence de ces changements diminue, la puissance nécessaire pour le fonctionnement de l'afficheur tend vers zéro.

### Principe de fonctionnement d'un afficheur bistable:

Un afficheur bistable tel que l'afficheur que l'on désignera dans la description sous l'appellation commerciale BINEM® est présenté schématiquement sur la figure 1. Un tel afficheur est décrit dans les documents [I], [2] indiqués en fin de description. Il utilise deux textures tordues dont les torsions diffèrent d'un angle de +/-180°+/-30°, soit entre 150° et 210° en valeur absolue, la texture de plus faible torsion étant prénommée U et la texture de plus forte torsion étant prénommée T. Ces deux textures sont stables sans champ appliqué, assurant ainsi la bistabilité de l'afficheur BiNem. Selon une mode préférentiel, la texture U est uniforme ou faiblement tordue à +/- 20° c'est à dire que les molécules sont sensiblement parallèles entre elles (illustrée sur la gauche de la figure 1) et l'autre texture T (illustrée sur la droite de la figure 1) diffère donc de la première par une torsion d'environ +/- 180°, ceci à +/- 15° près, soit entre 150° et 180° en valeur absolue. La couche de cristal liquide 30 est placée entre deux lames 20 et 10, que l'on appelle lame maître et lame esclave. La lame maître 20 comporte un substrat 21, une électrode 22 et une couche d'ancrage 24 réalisant un ancrage azimutal (dans le plan du substrat) et zénithal (perpendiculairement au plan du substrat) fort du cristal liquide (ce type de couche d'ancrage étant classique pour les LCD standards monostables), avec un "prétilt" ou pré-inclinaison par rapport à la surface de la lame 20, dont la valeur $\psi 2$ est également classique, proche de 5°. La

lame esclave 10 comporte un substrat 11, une électrode 12 et une couche d'ancrage 14 réalisant un ancrage zénithal faible, un ancrage azimutal moyen ou fort du cristal liquide et un "prétilt" très faible ($\psi 1 << 1°$ [3],[4]), cette couche d'ancrage étant une caractéristique essentielle de l'afficheur BiNem. Les deux prétilts $\psi 1$ et $\psi 2$ sont dans le même sens, c'est à dire que, dans la texture U, les molécules de cristal liquide restent inclinées selon le même signe d'inclinaison sur toute l'épaisseur de la cellule. Les électrodes habituellement transparentes 12 et 22 déposées sur les substrats 11 et 21 permettent d'appliquer un champ électrique perpendiculaire aux lames 10 et 20.

L'adjonction de polariseurs sur chacun des substrats 11 et 21 typiquement mais non limitativement à l'extérieur de la cellule permet d'associer à chaque texture un état optique, par exemple sombre pour U et clair pour T ou inversement, en fonction des angles des deux polariseurs par rapport aux directions d'ancrage.

Sous fort champ électrique une texture presque homéotrope, dénommée H et illustrée au milieu de la figure 1, est obtenue. Au voisinage de la surface de la lame esclave 10, les molécules lui sont perpendiculaires, l'ancrage zénithal est dit "cassé". On appelle tension de cassure Vcass la tension électrique correspondant à la cassure de l'ancrage sur la lame esclave 10. A la coupure du champ électrique, la cellule évolue vers l'une ou l'autre des textures bistables U et T (voir figure 1). Lorsque les signaux de commande utilisés induisent un fort écoulement du cristal liquide au voisinage de la lame maître 20, le couplage hydrodynamique 26 entre la lame maître 20 et la lame esclave 10 induit la texture T. Dans le cas contraire, la texture U est obtenue par couplage élastique 28 entre les deux lames 10 et 20, aidé par l'inclinaison éventuelle de l'ancrage faible [1], [2].

Les 3 modes d'adressage développés pour les cristaux liquides standards (direct, multiplexé, actif) peuvent être utilisés pour l'afficheur BiNem. Le mode d'adressage le plus commun de l'afficheur BiNem est l'adressage passif multiplexé, mais un adressage actif à l'aide de transistors en couches minces est également possible [5]. Dans les modes multiplexés actif et passif, l'afficheur BiNem est un écran matriciel formé de n fois m éléments d'écran appelés pixels, n étant le nombre de lignes et m le nombre de colonnes, et l'adressage s'effectue ligne par ligne.

Un schéma de principe des électrodes formées sur les deux substrats de verre 11 et 21 d'un afficheur classique conforme à l'état de la technique est illustré figure 2a. Généralement, les électrodes conductrices sont réalisées avec un matériau conducteur transparent appelé ITO (Oxyde mixte d'Indium et d'Étain).Chaque pixel 23 est constitué par l'intersection d'une bande conductrice 12 et d'une bande conductrice 22. Ces bandes perpendiculaires sont déposées sur les substrats. Chaque pixel peut être adressé et ainsi commuté par l'application d'un champ électrique via les électrodes 12 et 22. Les zones susceptibles d'être adressées par un champ électrique sont dénommées zones actives. Les zones situées entre deux pixels sont dénommées espaces inter pixel 24. Les zones qui ne peuvent être adressées par un champ électrique, tel les espaces inter pixel, sont dénommées zones inactives.

La figure 2b représente cet afficheur classique en coupe avec les substrats 11 et 21 qui portent les électrodes telles que 12 et 22 et avec les couches d'alignement 14 et 24. Dans un afficheur classique remplit de cristal liquide par capillarité, un scellement 31 ferme l'espace situé entre les substrats excepté dans une ou plusieurs zones du pourtour de l'afficheur où des orifices de remplissage tel que 32 sont prévus pour permettre le remplissage de l'afficheur en matériau cristal liquide.

A noter que selon une variante de réalisation, dénommée ODF (One Drop Fill), le scellement 31 est réalisé après avoir placé le cristal liquide entre les substrats 11 et 12. Dans ce cas il n'est pas utile de prévoir l'orifice de remplissage.

Pour simplifier on qualifiera de remplissage le fait de placer le cristal liquide entre les deux substrats selon une couche d'épaisseur constante, et ce quelque soit la méthode employée.

**<u>Bistabilité des textures:</u>**

Une importante condition pour obtenir la bistabilité des textures est l'égalisation des densités d'énergies totales par unité de surface FU et FT, respectivement pour les textures U et T. Les deux contributions principales à l'énergie sont dues à la distorsion volumique, principalement une torsion en absence de champ, et l'énergie de surface, appelée énergie d'ancrage, due à l'interaction anisotrope du nématique avec les couches d'alignement.

Dans le dispositif BiNem une fine couche de cristal liquide nématique est contenue entre deux substrats. Du côté intérieur des substrats, sur les électrodes, sont déposés des couches d'alignement qui définissent des ancrages monostable du nématique sur les deux substrats : sur chaque surface (indice i = 1,2) une orientation unique (appelé axe facile, respectivement e1 et e2) du directeur nématique n est imposée par la couche d'alignement en absence de champ et d'autres forces appliquées sur le nématique. Chaque déviation du directeur nématique par rapport de l'axe facile sur une des surfaces coûte une énergie d'ancrage, qui est approximativement décrite par la formule :

$$F_s = \tfrac{1}{2} W_{zi} \sin^2(\beta_i - \theta_i)^2 + \tfrac{1}{2} W_{ai} \sin^2(\alpha_i - \varphi_i)^2$$

où $\theta i$ et $\varphi i$ sont respectivement les angles zénithal et azimutal définissant l'orientation du directeur nématique de surface, $\beta i$ et $\alpha i$ sont les angles correspondants pour l'axe facile sur la même surface. Wzi et Wai sont respectivement les coefficients définissant la force de l'ancrage zénithal et azimutal de la surface i (voir figure 3, avec xy plan du substrat et z perpendiculaire au plan du substrat). Les forces d'ancrages et les directions des axes faciles sur les deux surfaces dépendent de la nature chimico-physique du mélange nématique et des couches d'ancrage, ainsi que du procédé de fabrication de la cellule. Sur la lame maître de la cellule BINEM l'ancrage est fort et la déviation du directeur de surface n2 de l'axe facile e2 est négligeable. Sur la lame esclave l'ancrage est plus faible (Wz1 ≈ 3.10-4 J/m2 et Wa1 ≈ 3.10-5 J/m2) et sous le couple de torsion transmis à la surface le directeur nématique n1 peut dévier sensiblement de l'axe facile e1.

La distorsion nématique de volume dans la cellule fine BINEM coûte aussi une énergie importante. Pour un cristal liquide nématique achiral (c'est-à-dire non chiralisé) la contribution élastique de distorsion est sensiblement différente pour les textures U et T. La texture U est presque identique à la texture d'équilibre réalisée en absence des couples extérieures: son énergie élastique volumique est négligeable. La texture T, tordue approximativement à 180°, présente une énergie élastique plus élevée. En principe, cette énergie élevée rend la texture T instable à long terme : elle va se transformer en U par propagation de défauts et/ou par réorientation du directeur de surface.

Pour éviter ladite instabilité, le cristal liquide nématique utilisé dans les dispositifs BINEM est chiralisé, c'est à dire que l'on dilue dans le cristal liquide nématique une faible concentration de molécules optiquement actives appelées matériau dopant chiral. La texture du mélange cristal liquide nématique dopé s'organise alors spontanément en hélice en l'absence de contrainte de surface. Le pas chiral spontané de l'hélice P est défini par la distance le long de l'axe de l'hélice correspondant à une rotation de 360° du directeur nématique. P est inversement proportionnel à la concentration (quantité) de matériau dopant chiral et au pouvoir chiralisant dudit matériau dopant chiral. Pour un mélange cristal liquide nématique non dopé, ce pas P est infini.

Le dopage du cristal liquide nématique permet d'égaliser les énergies volumiques des deux textures. L'énergie de torsion par unité de surface d'une texture tordue à un angle de $\varphi$ radians est :

$$F_v = \frac{1}{2}K_{22}\int_0^d \left(\frac{\phi}{d} - \frac{2\pi}{P}\right)^2 dz = \frac{1}{2}\frac{K_{22}}{d}\left(\phi - 2\pi\frac{d}{P}\right)^2$$

où K22 ≈ $3.10^{-12}$ J/m est la constante élastique de torsion du nématique, d est l'épaisseur de la couche cristal liquide dans la cellule (typiquement d ≈ 1.5 μm) et $\Phi = \varphi 1 - \varphi 2 = \varphi(z=d) - \varphi(z=0)$ est la torsion totale dans la texture correspondante. La minimisation de l'énergie totale F=Fs+Fv pour chacune des deux textures donne la variation du directeur dans la cellule, sa déviation par rapport à l'axe facile sur la surface esclave et l'énergie totale d'équilibre en fonction du rapport d/P (i.e. en fonction de la concentration de produit dopant dans le mélange cristal liquide).

La dépendance des énergies FU et FT des deux textures en fonction du rapport d/P est schématisée sur la figure 4, en supposant $\Phi$U=0 rad et $\Phi$T=$\pi$ rad (qui correspond au cas particulier d'un ancrage infiniment fort et des axes faciles parallèles sur les deux lames). Pour d/P=0.25 les deux énergies sont égales et les textures deviennent infiniment stables sans champ appliqué. Les calculs analytiques et numériques confirment que cette condition de bistabilité est indépendante de la force d'ancrage et reste valable pour une torsion $\Phi$U arbitraire et $\Phi T = \Phi U \pm \pi$. Pour d/P sensiblement inférieur à 0.25, c'est la texture U qui a la plus faible énergie, pour d/P sensiblement supérieur à 0.25, c'est la texture T qui a la plus faible énergie.

Plus généralement, la variable d/P permet donc d'ajuster les énergies respectives des deux textures, favorisant ainsi la stabilité de l'une par rapport à l'autre.

Les deux textures U et T sont topologiquement distinctes: une transition continue entre elles est impossible sans cassure de l'ancrage. La contrainte topologique est un facteur important pour améliorer la stabilité des textures. Si le rapport d/P est mal adapté, une des textures a une énergie totale plus forte, mais une forte barrière énergétique l'empêche de se transformer en l'autre texture en absence de champ. De cette façon la cellule BINEM peut être bistable même dans le cas d'un rapport d/P non optimisé. Pour une cellule donnée on peut donc définir une "fenêtre de bistabilité" [Rb, Rh] pour le rapport d/P, spécifiant les valeurs minimale (Rb) et maximale (Rh) de ce rapport que la cellule peut supporter sans perte de la bistabilité.

A long terme la texture de forte énergie peut quand même se transformer en l'autre texture par nucléation et propagation de défauts. Cette commutation parasite par propagation, de défauts limite fortement l'étendue de la fenêtre de bistabilité. Dans la géométrie de l'afficheur BINEM qui fait l'objet de la présente invention deux types de lignes de défauts peuvent exister, séparant les domaines avec les deux textures bistables. Les structures et mobilités de ces

lignes de défauts étant différentes, leur effet réducteur sur la fenêtre de bistabilité n'est pas le même.

Les lignes de disinclinaison 180° (la région V sur la figure 5a), bien connues dans les nématiques, ont un coeur fondu, ou le paramètre d'ordre nématique s'annule ou même change de signe. Ces lignes sont disposées dans le plan médian de la cellule et forment des boucles fermées qui entourent le domaine qui contient une des textures. Ces lignes sont très mobiles et peuvent se déplacer avec un frottement visqueux dans le plan du dispositif sous l'action des forces élastiques ou autres. Si l'énergie de distorsion par unité de surface des deux textures bistables est différente (pas chiral mal adapté à l'épaisseur de la cellule) une force élastique agit sur la ligne et la déplace. Localement, après le passage de la ligne la texture de plus haute énergie (texture métastable) est remplacée par l'autre texture. Même pour un cas de rapport d/P optimal la tension de la ligne de défaut (énergie par unité de longueur) fait rétrécir et disparaître à long terme les boucles de disinclinaison, induisant une évolution lente des textures.

Une autre structure possible des lignes de défauts est schématisée sur la figure 5b. Il s'agit dans ce cas de murs de réorientation du directeur de surface de 180° (la région S sur la figure 5b), qui séparent les deux textures bistables (le directeur de surface tourne progressivement dans ce cas à 180° à travers le mur). Ces lignes, localisées sur la surface, sont beaucoup moins mobiles que les lignes de volume à cause de leur viscosité effective plus élevée et, surtout, d'une friction "solide" due à l'accrochage de la ligne sur les irrégularités de surface et/ou à la mémoire locale de l'ancrage. Due à la friction solide, il existe un seuil de la force appliquée sur la ligne au-dessous duquel la ligne reste "collée" sur la surface et ne se déplace pas. Grâce à ce "collage" du défaut, la fenêtre de bistabilité est élargie considérablement et une bistabilité infinie est obtenue même dans le cas d'un déséquilibre énergétique entre les textures.

Ce phénomène de "collage" des murs de réorientation sur la surface dépends fortement de la force d'ancrage azimutale : plus fort est Wa, plus grande devient la viscosité efficace de la ligne de surface et plus élevé est le seuil de "friction solide". La stabilisation supplémentaire des textures bistables par ce mécanisme est donc plus efficace à basse température, où la force d'ancrage augmente considérablement.

**<u>Limitations présentées par les afficheurs BiNem réalisés selon l'état de la technique:</u>**

<u>Nuisances pour la bistabilité des pixels dues à la mémoire de l'ancrage et du glissement de l'axe facile</u>

L'ancrage des nématiques sur les substrats est un processus compliqué, qui dépend non seulement de phénomènes élastiques, comme l'énergie d'ancrage imposée par la couche d'alignement, mais aussi des lents phénomènes de réorientation et réorganisation de l'interface cristal liquide/couche d'ancrage. En résultat, les propriétés d'ancrage peuvent varier pendant la vie de la cellule en fonction de son histoire, force et durée des couples appliqués sur la surface, orientation du directeur de surface par rapport à l'axe facile, traitement thermiques, etc. De nombreux phénomènes, appelés effets de "mémoire de surface" ou plus précisément "mémoire d'ancrage" ont été observés dans les cristaux liquides (mémorisation de l'alignement par écoulement, variation de l'énergie d'ancrage dans le temps, glissement de l'axe facile, etc). Le glissement de l'axe facile (ou glissement d'ancrage) est le phénomène le plus gênant pour les dispositifs d'affichage : sous un fort couple, appliqué sur la surface pour des longs temps, on observe une lente réorientation de l'axe facile lui-même, et pas seulement du directeur de surface. Ce phénomène est observé pour tous les ancrages, forts ou faibles et dans toutes les géométries, zénithale ou azimutale. Pour les ancrages faibles ou modérés il est particulièrement fort. En effet, le mécanisme principal de la mémoire d'ancrage est l'adsorption sur le substrat d'une fine couche nématique orientée, qui sert comme une couche d'ancrage supplémentaire. L'axe facile initiale de cette couche adsorbée est parallèle à l'orientation du directeur de surface pendant sa formation. Cet axe facile mémorisé n'est pas constant dans le temps, une lente réorientation est observée due à la désorption des molécules nématiques et de leur réadsorption avec une orientation légèrement différente. L'axe facile efficace de la surface est donc une moyenne de l'axe facile initial, due d'une part aux propriétés physico-chimiques de la couche d'alignement et de son traitement, et d'autre part de l'histoire de la cellule mémorisée par la couche adsorbée. Le glissement de l'ancrage est plus rapide aux premières heures après la fabrication de la cellule et très lent ou presque saturé après un long temps sous couples modérés et constants. L'amplitude du glissement est en première approximation proportionnelle au couple transmis à la surface et son signe dépend du signe du couple. L'axe facile glisse toujours vers le directeur de surface, i.e. dans la direction imposée par le couple.

Le glissement de l'axe facile est nuisible pour les dispositifs bistables parce qu'il perturbe l'équilibre énergétique des textures. En effet, dans les textures bistables U et T un couple relativement fort dû au dopage chiral est transmit sur la surface esclave. Le signe de ce couple change avec la texture : il tord la texture U à un angle fini (environ 10° typiquement) et il détord légèrement la texture T (à 170° par exemple) pour le cas non limitatif où le point de départ est une texture U de torsion 0° et une texture T de torsion 180°. Le directeur de surface se trouve donc désorienté par rapport à l'axe facile dans les deux textures (à +/- 10° dans l'exemple) et le glissement de l'axe facile due à cette désorientation a le signe opposé dans les deux textures.

Due au glissement de l'ancrage sur la lame esclave, les énergies des textures bistables sont légèrement déséquilibrées. Dans une zone stockée longtemps en texture U, l'énergie de la texture U (FU) diminue et celle de la

texture T (FT) augmente, et vice versa dans une zone stockée en T : la mémorisation d'une texture favorise toujours la stabilité de cette même texture et défavorise la texture opposée. Si l'amplitude du glissement est excessivement forte, le rapport d/P du mélange cristal liquide de la cellule peut sortir de la fenêtre de bistabilité [Rb, Rh] due à la perte de la stabilité de la texture opposée de celle de stockage. Un glissement trop important conduit donc à une perte de stabilité de l'une des textures en l'absence de champs appliqué. La stabilité simultanée des deux tectures U et T dans les pixels est une condition nécessaire au bon fonctionnement d'une cellule de type Binem. Le glissement excessif est nuisible aussi pour l'apparence optique de la cellule : selon l'histoire locale les mêmes textures (par exemple U) vont être tordues à des angles différents, résultant en luminosités différentes et en "marquage" de la cellule faisant apparaître des traces des images affichées précédemment. Ces deux effets indésirables, perte de bistabilité et marquage, sont d'autant plus nuisibles quand deux zones du même pixel ont glissé dans les directions opposées.

Pour minimiser les effets du glissement dans les dispositifs BINEM les matériaux d'ancrage et les mélanges cristaux liquides utilisés sont choisis de façon à minimiser l'amplitude du glissement. Néanmoins, il est impossible d'éviter complètement le glissement, due au couple fini appliqué à la surface esclave dès le remplissage de la cellule avec le cristal liquide. Du point de vue des effets néfastes du glissement la période juste après le remplissage de la cellule est la plus dangereuse : d'une part le taux de glissement est plus fort pendant cette période quand se forme la couche nématique adsorbée, d'autre part il est impossible dans ces premières heures de la vie de la cellule d'appliquer les signaux de commande pour contrôler les textures (par exemple, pour mettre toute la cellule dans un état bien défini pour éviter des non-uniformités dues au glissement variable).

<u>Contrôle de la texture dans les zones inactives de l'écran:</u>

A part les pixels, dans lesquels sont présentes les textures U et T, l'écran comporte des zones non adressées ou inactives, par exemple mais non limitativement les espaces inter-pixels. L'une ou les deux électrodes par exemple en ITO ont été enlevées dans ces zones pour rendre possible l'adressage indépendant des pixels. Pour l'apparence optique de l'écran et pour aider sa bistabilité il est préférable d'imposer la même texture dans toutes les zones inactives, de préférence une texture fortement tordue. Due à l'absence d'au moins une des électrodes, dans ces zones la couche cristal liquide est plus épaisse $di = d + \Delta d$, où d est l'épaisseur de la couche de cristal liquide nématique dans les pixels (typiquement $d \approx 1.5\ \mu m$) et $100nm < \Delta d < 300nm$ est l'épaisseur de (des) électrode(s) enlevée(s). Le rapport d/P est choisi habituellement proche à la valeur théorique 0.25 afin d'assurer la bistabilité des pixels, c'est-à-dire la stabilité des deux textures U et T sans champ appliqué dans les pixels. Dans les zones inactives on obtiendra donc $di/P>0.25$, et une texture fortement tordue est favorisée et va se former spontanément dans ces zones pendant le remplissage de la cellule si le système est en équilibre.

Si l'ancrage azimutal est faible sur une des couches d'alignement dans la zone inter pixel, par exemple sur la couche d'ancrage zénithal faible, la texture de plus forte torsion qui va se former dans ces zones lorsque le système est en équilibre est une texture qui n'est pas nécessairement identique à la texture T présente dans le pixel, mais qui demeure fortement tordue, typiquement de torsion comprise entre 90° et 210° en valeur absolue, ceci pour le cas où la texture faiblement tordue dans le pixel U est comprise entre 0° et 20° en valeur absolue.

Dans les conditions normales de fabrication des cellules la condition d'équilibre est rarement satisfaite. En effet, lors de la propagation du cristal liquide dans la cellule pendant le remplissage, de forts écoulements sont créés dans la cellule, appliquant sur les surfaces et dans le volume de très forts couples hydrodynamiques, supérieurs aux couples d'ancrage et de distorsion volumique. De plus, sur le front de remplissage l'ancrage très fort du nématique sur l'interface du ménisque exerce aussi des couples importantes et mal contrôlés, qui déséquilibrent localement les deux textures bistables. Pour ces raisons, habituellement pendant le remplissage les textures T et U se forment aléatoirement dans les pixels de la cellule. Dans les zones inactives de la cellule, par exemple des zones interpixels, des textures faiblement tordue (que nous dénommerons Uinac, typiquement de torsion comprise entre 0° et 80° en valeur absolue) et des textures fortement tordue (que nous dénommerons Tinac typiquement de torsion comprise entre 90° et 210° en valeur absolue) se forment également aléatoirement. A la fin du remplissage les écoulements s'arrêtent et la cellule relaxe vers l'équilibre. Due à la plus basse énergie de la texture Tinac dans les inter-pixels, certains des domaines en texture Uinac sont remplacés par la texture Tinac par déplacement des lignes de défauts. Pourtant, de nombreuses zones peuvent rester en texture Uinac , due au collage des lignes de défauts sur les surfaces et à la mémoire d'ancrage, en particulier le glissement de l'axe facile sur la surface esclave, très fort et rapide suivant le premier contact du nématique avec la surface. Plus longtemps ces zones restent en texture Uinac, plus fort est le glissement local. Après un temps de mémorisation de quelques heures l'équilibre énergétique local est faussé et la texture Uinac devient la texture stable dans certaines zones inactives. Due à l'absence de champ dans ces zones inactives, tels les espaces inter-pixels, il est impossible de forcer la commutation de ces zones vers la texture Tinac et elles restent définitivement en texture Uinac. L'aspect optique de la cellule est dégradé et sa bistabilité est affaiblie par la présence de lignes de défauts qui peuvent se propager et résultent en transitions incontrôlées entre les textures bistables.

Difficulté d'optimisation simultanée des zones actives et inactives:

La figure 6 présente la dépendance théorique de la bistabilité des pixels en fonction du rapport d/P. Les courbes C1 (pour la texture U) et C2 (pour la texture T) montrent le pourcentage de la surface des zones actives où la texture respective reste stable pour la valeur d/P correspondante (échelle de gauche) La superposition des deux courbes définit une "fenêtre de bistabilité" [Rb,Rh]: un domaine de valeurs d/P dans lequel les deux textures U et T restent stables dans les zones actives. La largeur de ce domaine dépend des propriétés d'ancrage et elle devient plus étroite à haute température, à cause de la grande mobilité des défauts qui séparent les deux textures. Sur la même figure 6 est présentée la courbe C3 correspondant au pourcentage de surface des zones inactives en texture Tinac théorique en fonction de d/P (échelle de droite). Pour les valeurs de d/P situées à droite de la valeur d/P correspondant à la valeur 100% de la courbe C3, théoriquement le seul état stable dans les zones inactives est la texture Tinac, grâce à leur surépaisseur. Finalement, la courbe C4 corresponds à la mesure expérimentale du pourcentage de la surface des zones inactives en fonction de d/P qui présentent la texture Tinac voulue (échelle de droite). On voit que contrairement aux calculs théoriques (courbe C3), en pratique la plage des valeurs de d/P permettant l'obtention de la texture Tinac dans 100 % des zones inactives (plage de d/P de la zone grisée) ne se recouvre pas avec la plage des valeurs de d/P incluses dans la fenêtre de bistabilité [Rb,Rh]. Il est donc difficile d'assurer à la fois la bistabilité dans les zones actives et 100% des zones inactives en texture Tinac.

La figure 7 illustre la difficulté d'obtenir 100% des zones interpixels en texture Tinac. Elle représente une cellule cristal liquide de type BiNem après remplissage et commutation de l'ensemble de la cellule en texture U, de teinte sombre sur cet exemple tel que le pixel PU. La texture T correspond ici à une teinte claire. On constate qu'une partie des zones inter pixel sont en texture Uinac, de torsion non nécessairement égale à U mais proche, ce qui explique la similitude de teinte (sombre également) sur la figure 7 entre le pixel PU et l'espace interpixel IPUinac.

Par contre, d'autres parties des zones inter pixel sont en texture Tinac, de torsion proche mais non nécessairement égale à T, d'où également la teinte claire de ces zones inter pixel telles que les zones inter pixel IPTinac.

L'objet de la présente invention est d'assurer une meilleure stabilité des textures U et T dans les zones actives en minimisant le glissement, cette stabilité étant une condition nécessaire à un bon fonctionnement de la cellule cristal liquide de type Binem. Avantageusement, la texture la plus fortement tordue Tinac est obtenue dans l'ensemble des régions inactives, ce qui est préférable pour l'apparence optique de la cellule.

## RESUME DE L'INVENTION

L'invention a donc pour objet un procédé de fabrication d'une cellule d'affichage bistable à cristal liquide nématique. Une telle cellule comporte deux textures cristal liquide tordues dont les torsions diffèrent d'un angle de 150° à 210° en valeur absolue, définissant ainsi deux textures, l'une faiblement tordue et l'autre fortement tordue. Elle comporte deux substrats, chacun des substrats comportant des électrodes de commande. En outre les surfaces des substrats portent lesdites électrodes et comportent une couche d'un matériau ayant subi un traitement d'alignement destiné à orienter des molécules de cristal liquide. Lesdites électrodes se présentent sous la forme de bandes conductrices de l'électricité. Les deux substrats forment entre eux un espace d'épaisseur constante d destiné à être rempli de cristal liquide. Ladite cellule comprenant des zones actives adressables électriquement situées à l'intersection desdites bandes et dénommées pixels, et des zones inactives constituées des zones en dehors des zones actives. La texture de plus faible torsion est prénommée U pour les zones actives et Uinac pour les zones inactives, et la texture de plus forte torsion est prénommée T pour les zones actives et Tinac dans les zones inactives. Le procédé de l'invention comprend les étapes suivantes:

- une étape de mélange dudit cristal liquide avec au moins un produit dopant qui permet d'obtenir un pas chiral spontané initial Pi du mélange cristal liquide tel que la texture de plus forte torsion sera favorisée lors du remplissage à la fois dans les zones actives et inactives de la cellule cristal liquide d'épaisseur d et dont le pouvoir chiralisant peut être modifié par un traitement approprié,
- une étape de mise en place dudit mélange de cristal liquide entre lesdits substrats de la cellule à cristal liquide,
- une étape de traitement déchiralisant du mélange cristal liquide diminuant le pouvoir chiralisant du produit dopant de manière irréversible et d'une façon contrôlée, tel que le pas chiral spontané final Pf obtenu après le traitement déchiralisant rend les deux textures U et T stables sans champs appliqué dans les zones actives. Avantageusement la texture de plus forte torsion est obtenue dans les zones inactives de la cellule cristal liquide.

Selon une forme de réalisation du procédé de l'invention, la torsion de la texture de plus faible torsion U est comprise entre -20° et +20°.

Avantageusement, le pas chiral spontané initial Pi du mélange cristal liquide est tel que d/Pi est supérieur ou égal à 0.4.

Egalement avantageusement, le pas chiral spontané final Pf obtenu après le traitement déchiralisant est tel que d/Pf = 0.25 ± 0.05.

Selon une forme de réalisation du procédé selon l'invention, lors de l'étape de mélange dudit cristal liquide avec un produit dopant, la quantité de produit dopant est choisie de façon que le rapport d/Pi initial est sensiblement multiple de 0.5

Selon une variante de réalisation, lors de l'étape de mélange le rapport d/Pi est sensiblement égal à 0.5 ± 0.1.

Avantageusement, ledit traitement déchiralisant est tel qu'il égalise sensiblement les énergies des deux dites textures (U et T) du cristal liquide dans les zones actives de la cellule cristal liquide.

Selon une autre variante de réalisation, le pouvoir chiral final du produit dopant après la déchiralisation du mélange cristal liquide est telle que le rapport d/Pf est égal à 0.25 ± 0.05.

Selon une autre variante de réalisation; ledit produit dopant comporte au moins un premier et un deuxième composé dopant, le premier composé dopant étant destiné à conserver son pouvoir chiral stable lors du traitement déchiralisant tandis que le deuxième composé dopant étant destiné à avoir son pouvoir chiral modifié de façon irréversible lors du traitement déchiralisant.

Selon cette variante, ledit deuxième composé dopant peut être un matériau à base de:

1 R,4R-2-(4-phenylbenzylidene)-p-menthan-3-one.

Avantageusement, ledit produit dopant induit une hélice lévogyre au cristal liquide.

Selon une forme de réalisation, ledit traitement déchiralisant peut être un traitement thermique.

Selon une autre forme de réalisation, ledit traitement déchiralisant peut être un traitement par illumination optique tel que un rayonnement ultraviolet ou visible.

Avantageusement, ledit cristal liquide ne contient pas de matériau polymère.

Selon une variante du procédé de l'invention, après l'étape de mise en place dudit mélange cristal liquide entre les deux substrats et avant l'étape de traitement déchiralisant ledit procédé comporte une étape de mémorisation de la texture cristal liquide de plus forte torsion dans les zones actives et inactives de la cellule cristal liquide, cette étape de mémorisation étant effectuée en gardant la cellule telle quelle pendant un laps de temps donné.

Ledit laps de temps donné de l'étape de mémorisation de la texture cristal liquide de plus forte torsion peut être compris entre 30 minutes et 24 heures.

Durant l'étape de mémorisation, la température du cristal liquide est avantageusement maintenue entre 20° et 40°.

Selon une autre variante, après l'étape de mise en place dudit mélange cristal liquide entre les deux substrats, avant et/ou après l'étape de traitement déchiralisant, ledit procédé comporte une étape de recuit de la cellule à cristal liquide.

Avantageusement l'étape de recuit après l'étape de mise en place dudit mélange cristal liquide entre les deux substrats a lieu avant l'étape de mémorisation.

L'invention a également pour objet un dispositif de visualisation qui comporte une texture cristal liquide correspondant à la texture de plus forte torsion dans les espaces inter pixels et d'autres zones inactives.

## BREVE DESCRIPTION DES FIGURES

Les différents objets et caractéristiques de l'invention apparaîtront plus clairement dans la description qui va suivre et dans les figures annexées parmi lesquelles:

- la figure 1 présente schématiquement l'afficheur bistable de type BiNem,
- les figures 2a et 2b représentent une structure d'un écran à cristal liquide matriciel à adressage passif multiplexé,
- la figure 3 décrit les différents angles intervenant dans le calcul de l'énergie d'ancrage
- la figure 4 schématise la dépendance des énergies FU et FT des deux textures U et T en fonction du rapport d/P,
- les figures 5a et 5b illustrent la structure des lignes de défauts qui séparent les textures U et T,
- la figure 6 représente la dépendance théorique de la stabilité des textures U et T en fonction du rapport d/P (échelles de gauche) et la variation théorique et expérimentale du pourcentage de surface des régions inactives en texture Tinac en fonction de d/P (échelle de droite)
- la figure 7 représente une cellule cristal liquide de type BiNem après remplissage et commutation de l'ensemble de la cellule en texture U (sombre) où l'on constate qu'une partie des zones inter pixel ne sont pas en texture Tinac (clair) mais en texture Uinac (sombre).
- la figure 8 illustre le procédé de l'invention et notamment le changement de pas chiral spontané du mélange cristal liquide s'opérant entre la phase précédent le remplissage et la phase postérieure au remplissage et au traitement déchiralisant
- la figure 9 représente un diagramme d'un exemple de procédé selon l'invention.
- la figure 10 illustre le fait que pendant le remplissage selon l'état de la technique les textures U et T se forment

arbitrairement dans les pixels et les textures Uinac et Tinac se forment arbitrairement dans les zones interpixels

- La figure 11 décrit une cellule remplie selon l'invention et dont l'ensemble de la cellule est commuté en U (foncé) après le remplissage. On constate que tous les interpixels sont en texture Tinac (claire).
- La figure 12 récapitule les 3 variantes pouvant être appliquées au procédé selon l'invention décrite figure 9.

**DESCRIPTION DETAILLEE**

De manière générale, l'invention prévoit de mélanger au cristal liquide nématique utilisé dans un afficheur bistable de type BiNem au moins un produit dopant chiral dont le pouvoir chiralisant peut être modifié au cours du processus de fabrication de l'afficheur par des traitements supplémentaires, tels que illumination avec de la lumière visible ou ultraviolette, traitement thermique à une température élevée, etc.

La plupart des produits dopants chiraux utilisés dans l'industrie ne présentent pas de telles propriétés : leur pouvoir chiralisant est constant, défini par la structure moléculaire du matériau dopant.

Pourtant, plusieurs laboratoires ont développé des molécules dont le pouvoir chiralisant peut être modifié, d'une façon réversible ou irréversible, par des traitements induisant des variations de la conformation moléculaire du dopant et de son pouvoir chiral [12].

De telles molécules sont disponibles commercialement et leur utilisation a été proposée par exemple pour permettre une variation de la longueur d'onde centrale de la bande de réflexion sélective de la lumière dans les afficheurs cholestériques couleur [6] [7].

Dans la suite nous allons appeler le matériau dopant au pouvoir chiral variable Dopant Chiral Actif (DCA) pour le différentier d'un éventuel Dopant Chiral Passif (DCP), i.e. un matériau dopant usuel dont le pouvoir chiralisant ne varie pas avec les traitements subis. Dans la présente invention l'utilisation du DCA permet de modifier d'une façon contrôlée le pas chiral spontané du mélange cristal liquide nématique au cours de la fabrication de l'afficheur. Rappelons que le pas chiral spontané du mélange cristal liquide nématique dopé est déterminé par le pouvoir chiralisant intrinsèque du matériau dopant et par la quantité de ce matériau qui est diluée dans le mélange cristal liquide nématique.

Dans un premier temps, pendant le remplissage de la cellule, le pas chiral spontané initial Pi est choisi suffisamment court pour favoriser l'état le plus fortement tordu par rapport à l'état le plus faiblement tordu partout dans la cellule, à la fois pour les zones actives et pour les zones inactives. Ceci pour permettre à la fois de minimiser le glissement de l'axe facile pendant et après le remplissage, et de favoriser la texture la plus fortement tordue dans les zones inactives.

Une fois le remplissage terminé et d'éventuels traitements nécessaires pour adapter les propriétés d'ancrage de la couche d'ancrage zénithal faible effectués, un traitement "déchiralisant" est appliqué pour modifier le pouvoir chiral du DCA. Une déchiralisation signifie une diminution du pouvoir chiralisant du DCA, c'est-à-dire une augmentation du pas chiral spontané. Le pas chiral spontané du mélange cristal liquide devient alors le pas dit final Pf, choisi proche de la valeur théorique optimale qui permet l'égalisation des énergies des deux textures dans les pixels. Pour le cas particulier non limitatif d'axes faciles parallèles imposées par la couche d'alignement sur les deux surfaces, la valeur théorique optimale est définie par la relation $d/Pf = 0.25$, qui assure la meilleure stabilité des textures U et T sans champ appliqué dans les pixels. Préférentiellement on cherchera à obtenir $d/Pf = 0.25 \pm 0.05$. Cependant, pour certaines couches d'alignements ayant des propriétés d'ancrage particulières, l'intervalle acceptable de valeurs de d/Pf peut être plus restraint, par exemple $d/P = 0.25 \pm 0.02$.

En appliquant des impulsions de commande, la texture souhaitée, U , ou T, ou un mélange des deux textures pour obtenir des niveaux de gris [8] est affichée dans les zones actives, tandis que dans les zones inactives la texture Tinac, imposée lors du remplissage, est conservée ou peu modifiée.

Cette procédure est schématisée en figure 8 pour le cas particulier précité:

- dans une phase initiale le pas cholestérique spontané Pi est choisi suffisamment court, dans la région de valeurs d/Pi »0.25, pour favoriser et assurer l'état fortement tordu, T ou Tinac, partout dans la cellule malgré les fortes perturbations pendant le remplissage de la cellule et l'accrochage des lignes de défaut sur les surfaces, par exemple la surface d'ancrage faible.
- Une fois le remplissage effectué, un traitement déchiralisant (symbolisé par la flèche en haut de la figure 8) est réalisé de manière à obtenir un pas chiral spontané final Pf suffisamment proche de la condition d'équilibre des énergies des deux textures $d/Pf = 0,25$, afin de garantir une valeur de d/Pf dans les zones actives comprise dans la fenêtre de bistabilité [Rb,Rh].

La figure 9 représente donc un exemple de diagramme du procédé selon l'invention:

- Dans une première étape E1 un matériau chiral actif DCA est dilué dans le mélange cristal liquide de manière à ce que le pas chiral spontané initial Pi du mélange favorise la texture de plus forte torsion.
- Dans une deuxième étape E2 le mélange cristal liquide obtenu est introduit entre les deux substrats, de manière à

réaliser une cellule cristal liquide d'épaisseur constante : c'est l'étape de remplissage.

- Dans une troisième étape E3, un traitement déchiralisant est appliqué à la cellule contenant le mélange cristal liquide, de manière à ce que le pas chiral spontané final Pf permette aux deux textures U et T d'être stables sans champ appliqué dans les zones actives.

Avantageusement la texture Tinac de plus forte torsion est obtenue dans les zones inactives.

Une première variante de ce procédé est d'introduire après le remplissage E2 et avant le traitement déchiralisant E3 une étape E'2 (voir figure 12) dite de mémorisation de la texture de plus forte torsion, consistant par exemple dans le fait de garder la cellule telle quelle pendant un laps de temps déterminé (typiquement entre 30 minutes et 24 heures) et proche de la température ambiante (typiquement entre 15° et 40°).

Dans le choix du pas chiral spontané initial Pi il faut tenir compte des phénomènes de mémoire d'ancrage. En effet, si les couples de torsion appliqués à la surface d'ancrage faible par le cristal liquide dopé sont trop fortes, il en résultera un fort glissement de l'ancrage durant la phase initiale de fabrication, avant le traitement déchiralisant. Partout dans la cellule, à la fois dans les zones actives et inactives, l'axe facile de la surface de faible ancrage va dévier sensiblement de la direction initiale définie par le brossage de la couche d'alignement. Les énergies des deux textures bistables seront changées et la bistabilité des zones actives se trouvera compromise.

Un simple moyen d'éviter cet effet néfaste est de choisir le pas chiral spontané initial Pi proche des valeurs définis par la relation d/Pi = m/2, ou m est un nombre entier. En effet, dans ce cas la texture spontanée imposée dans la cellule par l'élasticité de volume et par le dopage chiral correspond à une torsion à nombre entier de demi-tours : le directeur de surface sur la lame d'ancrage faible se trouve spontanément parallèle (ou anti-parallèle) à l'axe facile, le couple appliqué sur la surface est donc nul ou au moins très faible, résultant en glissement négligeable de l'axe facile et donc une meilleure stabilité des deux textures. Evidemment, dans la plupart des cas pratiques la condition à satisfaire pour éviter le glissement se réduira à d/Pi = 0.5 +/-0.1, qui correspond au dopage chiral le plus faible compatible avec une configuration sans glissement. Pour mémoriser cette texture très favorable à la fois pour la stabilité des textures U et T dans le pixel et pour l'obtention d'une texture de plus forte torsion dans les zones inactives, la cellule peut être maintenue dans cet état un certain temps (étape E'2), avant le traitement déchiralisant, comme décrit précédemment par la première variante du procédé.

Le choix du Dopant Chiral Actif (DCA) pour la mise en oeuvre de la présente invention doit tenir compte d'un grand nombre de conditions pour éviter des perturbations du fonctionnement du dispositif BINEM et assurer sa longévité. Comme tous les autres composants présents dans les mélanges cristaux liquides pour la technologie BINEM, le DCA doit être stable chimiquement et thermiquement. De plus, il ne doit pas réagir chimiquement avec les autres composants ou avec les couches d'ancrage. Il doit être bien soluble dans le mélange pour éviter toute ségrégation et accumulation à la surface du dispositif.

La présence du DCA dans le mélange BINEM ne doit pas modifier ses propriétés d'ancrage, il est donc préférable de choisir un DCA avec le pouvoir chiral initial le plus fort possible, afin d'obtenir le pas initial Pi voulu en utilisant une concentration minimale du dopant. De la même façon, on préférera des dopants chiraux actifs qui présentent une très forte variation du pas après le traitement déchiralisant, pour satisfaire la relation Pi <<Pf avec une concentration minimale du DCA.

Il est préférable d'utiliser un DCA très sensible au traitement déchiralisant pour procéder avec une faible intensité de ce traitement, par exemple avec une faible dose d'exposition à la lumière ultraviolette ou une cuisson à basse température (<100°C). Le processus de fabrication se trouvera ainsi simplifié et raccourci, mais aussi les perturbations éventuelles dues au traitement sur les autres composants du mélange et de la cellule en général seront minimisées.

Pour simplifier le processus de production il est aussi nécessaire d'utiliser un DCA dont la variation du pouvoir chiral sature avec une dose croissante du traitement déchiralisant, assurant des larges marges de variation de cette dose pendant la fabrication sans changement des propriétés du dispositif BINEM et rendant le pas final Pf insensible à toute influence supplémentaire (rayonnement ultraviolet, température, etc.) que la cellule peut subir ultérieurement. Il est impératif aussi que la variation du pas chiral du dopant soit définitive et irréversible : une fois la cellule fabriquée selon l'invention, le pouvoir chiral ne doit plus changer pendant le temps de vie du dispositif.

Pour la réalisation de la présente invention, le dopage chiral doit assurer avec une bonne précision les valeurs du pas initial et du pas final, tout en respectant les conditions de stabilité dans le temps. En raison du nombre limité de molécules connues présentant une chiralité variable par traitement déchiralisant, il peut s'avérer difficile en pratique de satisfaire ces conditions en utilisant seulement un dopant chiral, le DCA. Pour une plus grande souplesse dans le choix des matériaux, on utilisera avantageusement un produit dopant chiral qui contiendra au moins deux molécules différentes, dont au moins une est un dopant chiral actif. L'autre molécule peut être un dopant chiral passif, i.e. un dopant chiral habituel, qui ne change pas son pouvoir chiral sous traitement.

Il est bien connu que le pouvoir chiral est une propriété additive et linéaire pour les faibles concentrations qui nous intéressent dans la présente invention. Il est donc toujours possible, sur la base de mesures séparées du pouvoir

chiral des différents matériaux dopants dans un mélange cristal liquide donné adapté au dispositif BINEM, de calculer les concentrations nécessaires des différents matériaux dopants chiraux pour assurer les pas Pi et Pf voulus dans le mélange cristal liquide dopé. Dans le cas optimal on utilisera une quantité minimale du DCA, nécessaire pour définir un pas chiral spontané initial Pi suffisamment court, et le pas chiral spontané final Pf sera défini essentiellement par le DCP, avec une faible correction due à la faible chiralité résiduelle du DCA après le traitement déchiralisant.

Pour la réalisation pratique des dispositifs bistables selon l'invention, plusieurs molécules chirales disponibles commercialement ont été étudiées en vue de leur utilisation comme des DCA. Le pouvoir chiral de ces molécules, avant et après le traitement déchiralisant, a été mesuré dans des cellules d'épaisseur variable par la méthode de Grandjean - Cano [9]. L'étude a montré qu'une molécule satisfaisant les exigences pour l'utilisation comme DCA est le 1R,4R-2-(4-phenylbenzylidene)-p-menthan-3-one (Doc [12], vendue sous le nom dopant chiral CD-PBM).

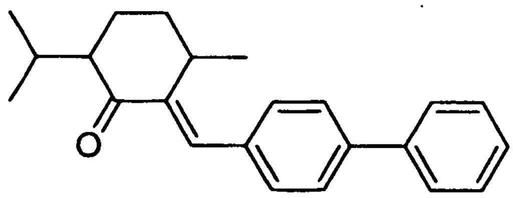

Le CD-PBM a montré une excellente stabilité thermique, chimique et électrochimique en contact avec les cristaux liquides et les couches d'orientation. Aucune dégradation ni variation des ancrages n'a été détectée dans les cellules après des stockages de 10 jours a -20°C et 10 jours à +60°C. La solubilité du CD-PBM dans les cristaux liquides adaptés au dispositif BINEM est très bonne et des solutions à 5% de CD-PBM en poids restent stables dans le temps sans cristallisation ni ségrégation de phase. Compte tenu du pouvoir chiral, fort de ce dopant, les concentrations nécessaires pour la mise en oeuvre de la présente invention sont inférieures à 1% et donc faciles à obtenir.

Le CD-PBM est compatible avec deux modes de traitement déchiralisant : chauffage à plus de 160°C ou exposition à la lumière ultraviolette de longueur d'onde inférieure à 365 nm. Dans les deux cas le mécanisme de variation du pouvoir chiral est un changement de la conformation moléculaire du matériau [12]: la conformation initiale réalisée à la synthèse du produit est fortement chirale, mais énergétiquement instable. Sous l'action de l'agitation thermique ou de la lumière ultraviolette absorbée la molécule se retrouve dans la conformation faiblement chirale, qui est thermodynamiquement stable : ce changement de conformation est irréversible.

Le procédé selon l'invention appliqué est le suivant :

a) Pour le mélange cristal liquide utilisé lors du remplissage, on choisit avantageusement un pas chiral spontané initial Pi<<4.d qui favorise très fortement la texture la plus fortement tordue. On évite de cette façon la formation de domaines de texture la plus faiblement tordue dans la cellule, aussi bien dans les pixels et inter-pixels, même pendant les fortes perturbations durant le remplissage. Le rapport d/Pi est choisi de préférence comme un multiple de 0.5 +/- 0.1, pour imposer une texture tordue à nombre entier de demi-tours, par exemple 180°, 360°, 540°, etc. Dans ce cas la texture tordue imposée par la torsion spontanée de volume est compatible avec la direction des axes faciles imposés par les couches d'alignement : le directeur de surface sur chaque substrat est parallèle à l'axe facile correspondant et le couple appliqué sur les surfaces et nul. Le glissement de l'axe facile est négligeable sur toute la surface de la cellule, zones actives et inactives. De manière optionnelle, après le remplissage la cellule est maintenue dans cet état un certain temps, par exemple de l'ordre de quelques heures à température ambiante, pour mémoriser cet état très favorable pour le dispositif.

b) Après le remplissage et une éventuelle étape de mémorisation de l'état de surface sans couple, le pas chiral spontané est modifié par un traitement déchiralisant, d'une façon contrôlée et irréversible pour le rendre compatible avec le fonctionnement bistable du dispositif BINEM. Le pas chiral spontané final Pf est proche à d/Pf = 0.25 +/- 0.05, la valeur théorique qui égalise les énergies des deux textures bistables U et T dans les pixels et qui favorise légèrement la texture la plus fortement tordue Tinac dans les inter-pixels. Après cet ajustement du pouvoir chiral les zones actives peuvent être commutés entre les deux textures U et T d'égale énergie qui vont rester stables du fait du faible glissement, et avantageusement les zones inactives restent dans l'état fortement tordu Tinac mémorisé.

<u>Moyens de contrôle du pouvoir chiral :</u>

Un produit dopant constitué d'au moins deux composés dopants chiraux avec des concentrations choisies de façon à obtenir le pas chiral spontané initial et final voulus est utilisé :

- un des composés est un matériau dopant chiral classique dont le pouvoir chiral ne varie pas avec les traitements thermiques, rayonnement ultraviolet et autres, choisi parmi les substances connues qui induisent un fort pouvoir chiral dans les cristaux liquides nématiques. Ce dopant va assurer la contribution principale dans la détermination du pas chiral spontané final, après le traitement déchiralisant.
- l'autre composé est un matériau dopant dont le pouvoir chiralisant peut être modifié par un traitement approprié, par exemple thermique ou par illumination de lumière visible ou ultraviolette. La variation du pouvoir chiral de ce matériau dopant entre avant et après traitement est forte et irréversible, assurant un pas chiral spontané du mélange cristal liquide nématique constant dans le temps après le traitement, indépendamment de traitement supplémentaires subis par la cellule pendant son fonctionnement. De préférence ce matériau dopant chiral a un pouvoir chiralisant important avant le traitement et beaucoup plus faible après le traitement. De préférence ce matériau dopant chiral induit un pouvoir rotatoire lévogyre au cristal liquide.

Premier exemple de réalisation de l'invention

Des afficheurs de type BINEM fonctionnels de format QVGA ont été réalisés selon l'invention, en utilisant un processus de fabrication standard, une couche d'ancrage polyimide classique pour la lame maître et une couche d'ancrage zénithal faible pour la lame esclave telle que décrite dans le document [10]. Après le remplissage avec le cristal liquide, l'épaisseur de la couche de cristal liquide d = 1,42 $\pm$ 0,03 $\mu$m a été mesurée expérimentalement, définissant un pas chiral spontané "optimal" P0 = 4.d = 5,68 $\mu$m (d/P0=0.25). Un cristal liquide nématique adapté à l'afficheur BiNem, tel que décrit dans le document [11], a été utilisé avec des dopages chiraux différents pour 2 séries de cellules (voir Tableau 1 ci-après).

Tableau 1

| | Concentrations des dopants Passif Xp et Actif Xa (en poids) | | Pas chiral Pi avant et après Pf le traitement déchiralisant | |
|---|---|---|---|---|
| | $X_p$ (%) | $X_a$ (%) | $P_i$ ($\mu$m) | $P_f$($\mu$m) |
| Série 0 | 1,45 | 0 | 5,6 | 5,6 |
| Série 1 | 1,30 | 0,57 | 2,9 | 5.6 |

Dans la série 0, faite selon l'état de l'art, le dopage chiral a été réalisé avec l'utilisation seulement d'un dopant chiral passif, dans ce cas le dopant commercialisé par la Société Merck sous l'appellation commerciale S-811.

Dans la série 1 le dopage est réalisé selon l'invention en utilisant un DCP (S-811) et un DCA (CD-PBM) tel que défini précédemment. Les concentrations de ces deux matériaux dopants chiraux ont été choisies pour assurer un pas initial de 2.9 $\mu$m.

La déchiralisation selon l'invention pour la série 1 a été réalisée par exposition des cellules à la lumière ultraviolette (longueur d'onde 365 nm, dose d'exposition 1.3 J/cm$^2$).

Pour les cellules de la série 0 on observe pendant le remplissage la formation arbitraire des textures U et T dans les pixels ainsi que des textures Uinac et Tinac dans les inter-pixels (IPUinac et IPTinac) tel que décrit figure 10. Les forts couples hydrodynamiques dues à l'orientation par l'écoulement dominent la formation de la texture pendant le remplissage. Après le passage du front du cristal liquide la texture relaxe sur une partie de la surface par déplacement des lignes de défaut qui séparent les deux textures bistables. Cette relaxation est seulement partielle et à la fin de la préparation de la cellule la surface continue de présenter une distribution arbitraire de régions de texture faiblement et fortement tordues mémorisées. Dans les pixels après la première commutation toute la surface va être mise dans la texture U ou T voulue, mais une instabilité de l'une des textures, due au glissement, est possible. Dans les interpixels et d'autres zones non adressées, des régions de texture Uinac et Tinac vont rester en cohabitation, dégradant l'apparence optique de la cellule et servant de sources de lignes de défauts qui peuvent se propager dans les pixels, résultant en une bistabilité réduite du dispositif.

Pour les cellules de la série 1 on observe pendant le remplissage la formation exclusive de la texture T dans les pixels et de la texture Tinac dans les interpixels. Les couples élastiques dus à la chiralisation à 2.9$\mu$m, qui favorisent la texture fortement tordue, dominent les couples dus aux écoulements pendant le remplissage. Après le passage du front du cristal liquide la texture fortement tordue est très largement majoritaire. Lorsque les textures faiblement et fortement tordues cohabitent, la pression de la texture fortement tordue sur les lignes de défaut qui séparent les deux textures est telle que la texture faiblement tordue, défavorisée, disparaît au profit de la texture fortement tordue, favorisée. En fin de remplissage, pixels et interpixels sont uniformément dans une texture fortement tordue de sorte que seule celle-ci est mémorisée. La torsion spontanée étant compatible avec la direction des axes faciles, le glissement de

l'ancrage subi par la cellule est minime et homogène. Grâce à la minimisation du glissement de l'axe facile on obtient des textures U et T stables dans les pixels.

Une cellule réalisée selon cet exemple de réalisation de l'invention est décrite figure 11. Après le remplissage et la déchiralisation, l'ensemble de la cellule est commuté en texture U avec tous les pixels en texture U tel que PU (foncé). On constate sur la figure 11 que tous les inter-pixels, tel que IPTinac, sont en texture Tinac (claire).

Deuxième exemple de réalisation selon l'invention

Afin d'explorer les valeurs possibles du pas chiral spontané final Pf, une gamme de valeurs du pas chiral spontané final Pf correspondant à un sous-dopage nul (Pf=P0) à faible (Pf ≥ P0) a été réalisée selon l'invention (voir tableau 2).

Tableau 2

| | Concentrations des dopants Passif Xp et Actif Xa (en poids) | | Pas chiral Pi avant et après Pf le traitement déchiralisant | |
|---|---|---|---|---|
| | $X_p$(%) | $X_a$(%) | $P_i$(μm) | $P_f$(μm) |
| Série 2 | 1,30 | 0,57 | 2,9 | 5.6 = P0 |
| Série 3 | 1,24 | 0.58 | 2.9 | 5,8 |
| Série 4 | 1.19 | 0,59 | 2,9 | 6,0 |

Après le remplissage, l'ensemble de la cellule est dans la texture la plus fortement tordue T dans les pixels et Tinac dans les interpixels.

Après la déchiralisation, les cellules des séries 2, 3 et 4 restent en texture T dans les pixels et Tinac dans les interpixels. A ce stade, les cellules des séries 2, 3 et 4 contiennent un mélange nématique chiralisé à respectivement un pas chiral final Pf de 5.6, 5.8 et 6μm. Au sein des pixels, les texture T et U sont donc à l'équilibre pour les cellules de la série 2 (Pf=P0) tandis que la texture U est favorisée pour les cellules de la série 3 et très favorisée pour les cellules de la série 4 (Pf>P0).

Une deuxième variante de l'invention consiste à introduire une étape de recuit E'3 après la déchiralisation, ici à titre d'exemple 1 heure à 90°. Ce recuit est classiquement mais non nécessairement présent dans le procédé de réalisation d'une cellule cristal liquide bistable de type BiNem selon l'état de la technique. Les 3 séries ont ici subit ce recuit.

Après le recuit E'3, les pixels des cellules des 3 séries ont basculés en texture U. Les interpixels des cellules des séries 2 et 3 se sont maintenus en texture Tinac tandis que les interpixels des cellules de la série 4 présentent désormais une distribution de régions en texture Uinac et Tinac. Le basculement des pixels en texture U s'explique de la manière suivante. Proche de la température de clarification du cristal liquide, soit 60°C, l'ancrage azimutal de la couche d'ancrage faible diminue considérablement. Dans ces conditions, les couples élastiques dus à la chiralisation définissent seuls la torsion du mélange, soit proche de 90° pour les séries 2, 3 et 4. En refroidissant, l'ancrage azimutal se renforce et le mélange doit adopter la texture localement la plus favorisée U ou T. Ainsi, les cellules adoptent la texture U au sein des pixels des trois séries. Ceci est sans incidence sur la stabilité des textures U et T dans les pixels, obtenue grâce au remplissage avec un cristal surdopé selon l'invention.

Seules les cellules des séries 2 et 3 se maintiennent en Tinac au sein des interpixels. Les interpixels des cellules de la série 4, fortement sous dopée, basculent partiellement en Uinac.

Par commutation sous tension, les pixels peuvent être mis dans la texture U ou T choisie tandis que les interpixels sont figés dans la texture présente après le recuit de l'étape E'3.

Dans cet exemple, on démontre qu'un pas initial de 2.9μm permet d'imposer la texture la plus fortement tordue T dans les pixels et Tinac dans les interpixels, dès le remplissage, ce qui garantit une bonne stabilité ultérieure des textures U et T dans les pixels. La texture Tinac des interpixels est conservée et mémorisée, ceci même après un éventuel recuit (étape E'3) classiquement mais non nécessairement présent dans les procédés selon l'état de la technique, tant que le pas final reste inférieur à 6μm.

Troisième exemple de réalisation selon l'invention

Dans un troisième exemple décrit dans le tableau 3, un cristal liquide nématique adapté à l'afficheur BiNem, tel que décrit dans le document [11], a été utilisé. Ces cellules ont la propriété d'avoir un ancrage azimutal fort du cristal liquide sur la couche d'ancrage zénithal faible.

Tableau 3

| | Concentrations des dopants Passif et Actif (en poids) | | Pas chiral avant et après traitement déchiralisant | |
|---|---|---|---|---|
| | $X_p$ (%) | $X_a$ (%) | $P_i$ (µm) | $P_f$(µm) |
| Série 5 | 1,41 | 0 | 5,8 | 5,8 |
| Série 6 | 1,41 | 0 | 5,8 | 5,8 |
| Série 7 | 1,26 | 0,56 | 3,0 | 5.8 |

Dans les séries 5 et 6, faite selon l'état de l'art, le dopage chiral a été réalisé avec l'utilisation seulement d'un dopant chiral passif par exemple le dopant commercialisé par la Société Merck sous l'appellation commerciale S-811.

Dans la série 7 le dopage est réalisé selon l'invention en utilisant un DCP (S-811) et un DCA (CD-PBM tel que défini précédemment). La concentration de ce matériau dopant chiral a été choisie pour assurer un pas initial Pi de 3 µm, et un pas chiral spontané final Pf de 5.8 µm garantissant la bistabilité du dispositif, c'est-à-dire la stabilité des textures U et T dans les pixels. La déchiralisation pour la série 7 a été réalisée par exposition des cellules à la lumière ultraviolette (longueur d'onde 365 nm, dose d'exposition 1.3 J/$cm^2$).

Pour les cellules des séries 5 et 6 correspondant à l'état de la technique, on observe pendant le remplissage, la formation arbitraire des textures U et T dans les pixels et Uinac et Tinac dans les inter-pixels, comme précédemment.

Pour les cellules de la série 7, on observe, pendant le remplissage, la formation exclusive de la texture T dans les pixels mais la formation arbitraire des textures Uinac et Tinac dans les inter-pixels. Malgré la pression de la texture la plus fortement tordue, la relaxation des lignes de défauts, fortement gênée par la force des ancrages, reste seulement partielle. A la fin de la préparation de la cellule la surface continue de présenter dans les interpixels une distribution arbitraire de régions Uinac et Tinac mémorisées. Ce phénomène peut arriver par exemple lorsque l'ancrage azimutal du cristal liquide dans les zones inter pixel et sur la couche d'ancrage zénithal faible devient trop fort. Cependant la cellule obtenue comporte deux textures stables U et T sans champs appliqué dans les zones actives.

Une troisième variante de l'invention consiste à introduire un recuit E"2 juste après le remplissage dans le cas ci-dessus, pour obtenir la texture Tinac dans tous les interpixels après l'étape de remplissage E2.

Selon cette troisième variante, après le remplissage, les cellules des séries 6 (selon l'état de l'art) et 7 (selon l'invention) subissent le recuit E"2, constitué par exemple de 10min à 70°C puis de 45min à 50°C. Ce recuit n'apporte aucune amélioration sur les interpixels des cellules de la série 6 selon l'état de la technique, tandis que la totalité des interpixels des cellules de la série 7 ont entièrement basculé en texture Tinac. Proche de la température de transition de phase nématique vers isotrope (ou température de clarification) du mélange cristal liquide, l'ancrage azimutal diminue considérablement. En chauffant à 70°C, soit environ 10°C au-dessus de la température de clarification du mélange cristal liquide, on s'assure que les cellules seront maintenues suffisamment longtemps à des températures où l'ancrage azimutal sera très faible. En absence d'ancrage azimutal, les lignes de défauts deviennent extrêmement mobiles. Pour les cellules de la série 6 selon l'état de la technique ce traitement ne permet pas d'augmenter le taux d'interpixels en texture fortement tordue, et ce parce que les énergies des deux textures sont proches, dû au rapport $d/P \approx 0.25$.

Au contraire, pour les cellules de la série 7 selon l'invention, la texture favorisée par le surdopage (à cette étape du process et dans cet exemple $d/P = 0.47$) est la texture la plus fortement tordue. Ainsi, sous la forte pression de la texture la plus fortement tordue (T ou Tinac), les lignes de défauts devenues très mobiles pendant le recuit E"2 sont déplacées et la texture Tinac remplace la texture Uinac dans la totalité des interpixels. Ce traitement doit être appliqué dans un délai très court après le remplissage afin de minimiser les glissements d'ancrage dans les interpixels en Uinac.

A titre d'exemple, on peut combiner l'étape E"2 de recuit effectué juste après le remplissage (dont un exemple est décrit précédemment) à l'étape E'2 de mémorisation de la texture la plus fortement tordue.

Dans cet exemple, on démontre qu'un pas initial Pi de 3µm ne permet pas d'imposer la texture la plus fortement tordue dans les interpixels dès l'étape de remplissage E2 lorsque l'ancrage azimutal du cristal liquide sur la couche d'ancrage zénithal faible devient trop fort. Dans ce cas, un recuit E"2 (par exemple 10min à 70°C puis 40min à 50°C) effectué dans les plus brefs délais après le remplissage rend les lignes de défaut très mobiles et permet de faire basculer la totalité des interpixels en texture Tinac. Typiquement ce recuit peut être effectué à une température supérieure ou égale à la température de clarification, ladite température étant préférentiellement comprise entre la température de clarification et 20° au-delà de cette température. Puis une descente à la température ambiante est effectuée, éventuellement par plateaux, typiquement comprise entre 5 minutes et 60 minutes. Ce traitement n'est efficace que pour cellule réalisée suivant l'invention.

La figure 12 récapitule les 3 variantes pouvant être appliquées au procédé selon l'invention décrit figure 9.

Variante 1 : étape E'2 de mémorisation de la texture la plus fortement tordue après l'étape de remplissage E2

Variante 2 : étape E'3 de recuit après déchiralisation
Variante 3 : étape E"2 de recuit après remplissage E2 et avant déchiralisation E3.

**Documents cités**

[1] US6327017
[2] I.Dozov et al «recent improvements of bistable nematic displays switched by anchoring breaking (BiNem), proc. SID 2001, p224-227
[3] P. Martinot-lagarde et al, SPIE vol. 5003 (2003), p25-34
[4] US7067180
[5] EP1565784
[6] US6061107
[7] C.Chien et al « Multicolor reflective Cholesteric display », Proc. SID 95, p169-171
[8] US 10/557721
[9] Handbook of Liquid Crystals, Vol. 2A, Chapter IV part 2, p 347, D. Demus, J. Goody, G.W. Gray, H.W. Spiess, V. Vill, WILEY-VCH
[10] US7067180
[11] US7115307
[12] L.V. Chepeleva et al « photochemical transformations of 2-arylidene-menthanones-chiral dopants for liquid crystalline systems", SPIE proceeding Volume 5257, 2003, p71-76.


**Revendications**

1. Procédé de fabrication d'une cellule d'affichage bistable à cristal liquide nématique, ladite cellule comportant deux textures cristal liquide tordues dont les torsions diffèrent d'un angle de 150° à 210° en valeur absolue, définissant ainsi deux textures, l'une faiblement tordue et l'autre fortement tordue, et comportant deux substrats (11, 21), chacun des substrats comportant des électrodes de commande (12, 22), en outre les surfaces des substrats portant lesdites électrodes comportant une couche (14, 24) d'un matériau ayant subi un traitement d'alignement destiné à orienter des molécules de cristal liquide, lesdites électrodes se présentant sous la forme de bandes conductrices de l'électricité, les deux substrats formant entre eux un espace d'épaisseur constante d destiné à être rempli de cristal liquide, ledit dispositif comprenant des zones actives adressables électriquement situées à l'intersection desdites électrodes (12, 22) et dénommées pixels, et des zones inactives constituées des zones en dehors des zones actives, la texture de plus faible torsion étant appelée U pour les zones actives et Uinac pour les zones inactives, et la texture de plus forte torsion étant appelée T pour les zones actives et Tinac dans les zones inactives, **caractérisé en ce que** ledit procédé comprend les étapes suivantes:

    - une étape (E1) de mélange dudit cristal liquide avec au moins un produit dopant qui permet d'obtenir un pas chiral spontané initial Pi du mélange cristal liquide tel que la texture de plus forte torsion sera favorisée lors du remplissage à la fois dans les zones actives et inactives de la cellule cristal liquide d'épaisseur d et dont le pouvoir chiralisant peut être modifié par un traitement approprié,
    - une étape (E2) de mise en place dudit mélange de cristal liquide entre lesdits substrats de la cellule à cristal liquide,
    - une étape (E3) de traitement déchiralisant du mélange cristal liquide diminuant le pouvoir chiralisant du produit dopant de manière irréversible et d'une façon contrôlée, tel que le pas chiral spontané final Pf obtenu après le traitement déchiralisant rend les deux textures U et T stables sans champs appliqué dans les zones actives.

2. Procédé de fabrication selon la revendication 1 **caractérisé en ce que** la texture de plus forte torsion est obtenue dans les zones inactives de la cellule cristal liquide.

3. Procédé de fabrication selon l'une des revendications 1 ou 2 **caractérisé en ce que** la torsion de la texture de plus faible torsion U est comprise entre - 20° et +20°.

4. Procédé de fabrication selon l'une des revendications 1 ou 2, **caractérisé en ce que** le pas chiral spontané initial Pi du mélange cristal liquide est tel que d/Pi est supérieur ou égal à 0.4.

5. Procédé de fabrication selon l'une des revendications 1 ou 2 , **caractérisé en ce que** le pas chiral spontané final Pf obtenu après le traitement déchiralisant est tel que d/Pf = 0.25 ± 0.05.

6. Procédé de fabrication selon l'une des revendications 1 ou 2, **caractérisé en ce que** lors de l'étape de mélange dudit cristal liquide avec un produit dopant, la quantité de produit dopant est choisie de façon que le rapport d/Pi initial est sensiblement multiple de 0.5.

7. Procédé de fabrication selon l'une des revendications 1 ou 2 ,**caractérisé en ce que** lors de l'étape de mélange le rapport d/Pi est sensiblement égal à 0.5 ± 0.1.

8. Procédé de fabrication selon les revendications 1 ou 2, **caractérisé en ce que** ledit traitement déchiralisant est tel qu'il égalise sensiblement les énergies des deux dites textures (U et T) du cristal liquide dans les zones actives de la cellule cristal liquide.

9. Procédé de fabrication selon l'une des revendications 1 ou 2, **caractérisé en ce que** le pouvoir chiral final du produit dopant après la déchiralisation dans le mélange cristal liquide est telle que le rapport d/Pf est égal à 0.25 ± 0.05.

10. Procédé de fabrication selon l'une quelconque des revendications 1 à 9, **caractérisé en ce que** ledit produit dopant comporte au moins un premier et un deuxième composé dopant, le premier composé dopant étant destiné à conserver son pouvoir chiral stable lors du traitement déchiralisant tandis que le deuxième composé dopant étant destiné à avoir son pouvoir chiral modifié de façon irréversible lors du traitement déchiralisant.

11. Procédé de fabrication selon la revendication 10, **caractérisé en ce que** ledit deuxième composé dopant est un matériau à base de: 1R,4R-2-(4-phenylbenzylidene)-p-menthan-3-one.

12. Procédé de fabrication selon l'une quelconque des revendications 1 à 9, **caractérisé en ce que** ledit produit dopant induit une hélice lévogyre au cristal liquide.

13. Procédé de fabrication selon l'une quelconque des revendications 1 à 9, **caractérisé en ce que** ledit traitement déchiralisant est un traitement thermique.

14. Procédé de fabrication selon l'une quelconque des revendications 1 à 9, **caractérisé en ce que** ledit traitement déchiralisant est un traitement par illumination optique tel que un rayonnement ultraviolet ou visible.

15. Procédé de fabrication selon l'une quelconque des revendications précédentes, **caractérisé en ce que** ledit cristal liquide ne contient pas de matériau polymère.

16. Procédé de fabrication selon l'une quelconque des revendications précédentes **caractérisé en ce qu'**après l'étape (E2) de mise en place dudit mélange cristal liquide entre les deux substrats et avant l'étape (E3) de traitement déchiralisant ledit procédé comporte une étape (E'2) de mémorisation de la texture cristal liquide de plus forte torsion dans les zones actives et inactives de la cellule cristal liquide, cette étape de mémorisation étant effectuée en gardant la cellule telle quelle pendant un laps de temps donné (t).

17. Procédé de fabrication selon la revendication 16, **caractérisé en ce que** ledit laps de temps donné (t) de l'étape (E'2) de mémorisation de la texture cristal liquide de plus forte torsion est compris entre 30 minutes et 24 heures.

18. Procédé de fabrication selon la revendication 17, **caractérisé en ce que** durant l'étape de mémorisation (E'2), la température du cristal liquide est maintenue entre 20°C et 40°C.

19. Procédé de fabrication selon l'une quelconque des revendications précédentes **caractérisé en ce qu'**après l'étape (E2) de mise en place dudit mélange cristal liquide entre les deux substrats, avant et/ou après l'étape (E3) de traitement déchiralisant, ledit procédé comporte une étape (E"2, E'3) de recuit de la cellule à cristal liquide.

20. Procédé de fabrication selon la revendication 19 **caractérisé en ce que** l'étape de recuit (E"2) effectuée avant l'étape (E3) de traitement déchiralisant se fait à une température supérieure ou égale à la température de clarification du cristal liquide.

21. Procédé de fabrication selon les revendications 16 et 20 **caractérisé en ce que** l'étape (E"2) de recuit a lieu après

l'étape (E2) de mise en place dudit mélange cristal liquide entre les deux substrats et avant l'étape (E'2) de mémorisation

**22.** Dispositif de visualisation à cristal liquide nématique réalisé selon le procédé selon l'une quelconque des revendications précédentes, **caractérisé en ce qu'**il comporte une texture cristal liquide correspondant à la texture de plus forte torsion dans les espaces inter pixels et d'autres zones inactives.

## Claims

**1.** Method of Manufacturing a bistable nematic liquid crystal display cell, said cell comprising two twisted liquid crystal textures, the twistings of which differ by an angle of 150° to 210° in absolute value, thus defining two textures, one weakly twisted and the other highly twisted, and comprising two substrates (11, 21), each of the substrates comprising control electrodes (12, 22), in addition the surfaces of the substrate bearing said electrodes comprising a layer (14, 24) of a material that has undertone an alignment treatment intended to orient liquid crystal molecules, said electrodes being in the forum of electrically conductive strips, the two substrates together forming a space having a constant thickness d intended to be filled with liquid crystal, said device comprising electrically addressable active zones located at the intersection of said electrode (12, 22) and known as pixels, and inactive zones constituted of the zones outside of the active zones, the texture of weaker twisting being known as U for the active zones and as Uinac for the inactive zones, and the texture of greater twisting being known as T for the active zones and as Tinac for the inactive zones, **characterized in that** said method comprises the following steps:

- a step (E1) of mixing said liquid crystal with at least one dopant product that makes it possible to obtain an initial, spontaneous pitch Pi of the liquid crystal mixture such that the texture of greater twisting will be favoured during filling both in the active and inactive zones of the liquid crystal cell of thickness d and of which the chiralizing power may be modified by an appropriate treatment;
- a step (E2) of placing said liquid crystal mixture between said substrates of the liquid crystal cell; and
- a step (E3) of dechiralizing treatment of the liquid crystal mixture reducing the chiralizing power of the dopant product irreversibly and in a controlled manner, such that the final spontaneous chiral pitch Pf obtained after the dechiralizing treatment renders the two textures U and T stable without a field applied in the active zones.

**2.** Manufacturing method according to Claim 1, **characterized in that** the texture of greater twisting is obtained in the inactive zones of the liquid crystal cell.

**3.** Manufacturing method according to either of Claims 1 and 2, **characterized in that** the twisting of the texture of weaker twisting U is between -20° and +20°.

**4.** Manufacturing method according to either of Claims 1 and 2, **characterized in that** the initial spontaneous chiral pitch Pi of the liquid crystal mixture is such that d/Pi is greater than or equal to 0.4.

**5.** Manufacturing method according to either of Claims 1 and 2, **characterized in that** the final spontaneous chiral pitch Pf obtained after the dechiralizing treatment is such that $d/Pf = 0.25 \pm 0.05$.

**6.** Manufacturing method according to either of Claims 1 and 2, **characterized in that** during the step of mixing said liquid crystal with a dopant product, the amount of dopant product is chosen so that the initial d/Pi ratio is substantially a multiple of 0.5.

**7.** Manufacturing method according to either of Claims 1 and 2, **characterized in that** during the mixing step, the d/Pi ratio is substantially equal to $0.5 \pm 0.1$.

**8.** Manufacturing method according to Claims 1, or 2, **characterized in that** said dechiralizing treatment is such that it substantially equalizers the energies of the two said textures (U and T) of the liquid crystal in the active zones of the liquid crystal cell.

**9.** Manufacturing method according to either of Claims 1 and 2, **characterized in that** the final chiral power of the dopant produce after dechiralization in the liquid crystal mixture is such that the d/Pf ratio is equal to $0.25 \pm 0.05$.

**10.** Manufacturing method according to any one of Claims 1 to 9, **characterized in that** said dopant product comprises

at least one first and one second dopant compound, the first dopants compound being intended to keep its chiral power stable during the dechiralizing treatment whereas the second dopant compound is intended to have its chiral power modified irreversibly during the dechiralizing treatment.

**11.** Manufacturing method according to Claim 10, **characterized in that** said second dopant compound is a material based on: 1R, 4R-2-(4-phenylbenzylidene)-p-menthan-3-one.

**12.** Manufacturing method according to any one of Claims 1 to 9, **characterized in that** said dopant product induces a laevorotatory helix in the liquid crystal.

**13.** Manufacturing method according to any one of Claims 1 to 9, **characterized in that** said dechiralizing treatment is a heat treatment.

**14.** Manufacturing method according to any one of Claims 1 to 9, **characterized in that** said dechiralizing treatment is a treatment using optical illumination such as ultraviolet or visible radiation.

**15.** Manufacturing method according to any one of the preceding claims, **characterized in that** said liquid crystal does not contain polymer material.

**16.** Manufacturing method according to any one of the preceding claims, **characterized in that**, after step (E2) of placing said liquid crystal mixture between the two substrates and before step (E3) of dechiralizing treatment, said method comprises a step (E'2) of memorizing the liquid crystal texture of greater twisting in the active and inactive zones of the liquid crystal cell, this memorizing step being carried out by keeping the cell as is for a given time period (t).

**17.** Manufacturing method according to Claim 16, **characterized in that** said given time period (t) of the step (E'2) of memorizing the liquid crystal texture of greater twisting is between 30 minutes and 24 hours.

**18.** Manufacturing method according to Claim 17, **characterized in that**, during the memorizing step (E'2), the temperature of the liquid crystal is kept between 20°C and 40°C.

**19.** Manufacturing method according to any one of the preceding claims, **characterized in that**, after step (E2) of placing said liquid crystal mixture between the two substrates, before and/or after step (E3) of dechiralizing treatment, said method comprises a step (E"2, E'3) of annealing the liquid crystal cell.

**20.** Manufacturing method according to Claim 19, **characterized in that** the annealing step (E"2) curried out before step (E3) of dechiralizing treatment takes place at a temperature greater than or equal to the liquid crystal clarification temperature.

**21.** Manufacturing method according to Claims 16 and 20, **characterized in that** the annealing step (E"2) takes place after step (E2) of placing said liquid crystal mixture between the two substrates and before the memorizing step (E'2).

**22.** Nematic liquid crystal display device produced according to the method according to any one of the preceding claims, **characterized in that** it comprises a liquid crystal texture corresponding to the texture of greater twisting in the inter-pixel spaces and other inactive zones.

## Patentansprüche

**1.** Verfahren zum Herstellen einer bistabilen Anzeigezelle mit nematischem Flüssigkristall, wobei die Zelle zwei verdrehte Flüssigkristallstrukturen, deren Verdrehungen sich dem Absolutwert nach um einen Winkel von 150° bis 210° unterscheiden und somit zwei. Strukturen bilden, wovon eine schwach verdreht ist und die andere stark verdreht ist, und zwei Substrate (11, 21), wovon jedes Steuerelektroden (12, 22) aufweist, enthält wobei außerdem die Oberflächen der Substrate, die die Elektroden tragen, eine Schicht (14, 24) aus einem Material aufweisen, das einer Ausrichtbearbeitung unterwerfen worden ist, die dazu vorgesehen ist, die Flüssigkristallmoleküle zu orientierten, wobei die Elektroden die Form von Elektrizität leitenden Bändern aufweisen, wobei die zwei Substrate zwischen sich einen Raum mit konstanter Dicke (d) bilden, der dazu vorgesehen ist, mit Flüssigkristall gefüllt zu werden, wobei die Vorrichtung elektrisch adressierbare aktive Zonen, die sich am Schnittpunkt der Elektroden (12, 22) befinden und Pixel genannt werden, und inaktive Zonen, die aus Zonen außerhalb der aktiven Zonen gebildet sind,

aufweist, wobei die Struktur mit schwächerer Verdrehung U für die aktiven Zonen und Uinac für die inaktiven Zonen genannt wird und wobei die Struktur mit stärkerer Verdrehung T für die aktiven Zonen und Tinac für die inaktiven Zonen genannt wird, **dadurch gekennzeichnet, dass** das Verfahren die folgenden Schritte enthält:

- einen Schnitt (E1) des Mischens des Flüssigkristalls mit wenigstens einem Dotierstoff, der ermöglicht, eine anfängliche spontane chirale Steigung Pi des Flüssigkristallgemischs zu erhalten, derart, dass die Struktur mit stärkerer Verdrehung beim Einfüllen sowohl in die aktiven Zonen als auch in die inaktiven Zonen der Flüssigkristallzelle mit der Dicke d begünstigt wird und deren Chiralisierungsfähigkeit durch eine geeignete Bearbeitung modifiziert werden kann,
- einen Schritt (E2) des Anordnens des Flüssigkristallgemisches zwischen den Substraten der Flüssigkristallzelle,
- einen Schritt (E3) der Entchiralisierungsbearbeitung des Flüssigkristallgemischs, der die Chiralisierungsfähigkeit des Dotierstoffs irreversibel und auf gesteuerte Weise verringert, so dass die endgültige spontane chirale Steigung Pf, die nach der Entchiralisierungsbearbeitung erhalten wird, die beiden Strukturen U und T ohne angelegtes Feld in den aktiven Zonen stabil macht.

**2.** Herstellungsverfahren nach Anspruch 1, **dadurch gekennzeichnet, dass** die Struktur mit stärkerer Verdrehung in den inaktiven Zonen der Flüssigkristallzelle erhalten wird.

**3.** Herstellungsverfahren nach einem der Ansprüche 1 oder 2, **dadurch gekennzeichnet, dass** die Verdrehung der Struktur mit schwächerer Verdrehung U im Bereich von -20° bis +20° liegt.

**4.** Herstellungsverfahren nach einem der Ansprüche 1 oder 2, **dadurch gekennzeichnet, dass** die anfängliche spontane chirale Steigung Pi des Flüssigkristallgemisches derart ist, dass d/Pi größer oder gleich 0,4 ist.

**5.** Herstellungsverfahren nach einem der Ansprüche 1 oder 2, **dadurch gekennzeichnet, dass** die endgültige spontane chirale Steigung Pf, die nach der Entchiralisierungsbearbeitung erhalten wird, derart ist, dass d/Pf= = 0,25 $\pm$0,05 ist.

**6.** Herstellungsverfahren nach einem der Ansprüche 1 oder 2, **dadurch gekennzeichnet, dass** im Schritt des Mischens des Flüssigkristalls mit einem Dotierstoff die Dotierstoffmenge in der Weise gewählt wird, dass das anfängliche Verhältnis d/Pi im Wesentlichen ein Vielfaches von 0,5 ist.

**7.** Herstellungsverfahren nach einem der Ansprüche 1 oder 2, **dadurch gekennzeichnet, dass** im Mischungsschritt das Verhältnis d/Pi im Wesentlichen gleich 0,5 $\pm$ 0,1 ist.

**8.** Herstellungsverfahren nach den Ansprüche 1 oder 2, **dadurch gekennzeichnet, dass** die Entchiralisierungsbearbeitung derart ist, dass sie die Energien dieser zwei Strukturen (U und T) des Flüssigkristalls in den aktiven Zonen der Flüssigkristallzelle im Wesentlichen aneinander angleicht.

**9.** Herstellungsverfahren nach einem der Ansprüche 1 oder 2, **dadurch gekennzeichnet, dass** die endgültige chirale Fähigkeit des Dotierstoffs nach der Entchiralisierung in dem Flüseigkristallgemisch derart ist, dass das Verhältnis d/Pf gleich 0,25 $\pm$ 0,05 ist.

**10.** Herstellungsverfahren nach einem der Ansprüche 1. bis 9, **dadurch gekennzeichnet, dass** der Dotierstoff wenigstens eine erste und eine zweite Dotierungsverbindung enthält, wobei die erste Dotierungsverbindung dazu vorgesehen ist, seine chirale Fähigkeit bei der Entchiralisierungsbearbeitung stabil zu halten, wähnend die zweite Dotierungsverbindung dazu vorgesehen ist, seine chirale Fähigkeit bei der Entchiralisierungsbearbeitung irreversibel zu modifizieren.

**11.** Herstellungsverfahren nach Anspruch 10, **dadurch gekennzeichnet, dass** die zweite Dotierungsverbindung ein Material ist auf der Basis von: 1R,4R-2-(4-Phenylbenzyliden)-p-menthan-3-on.

**12.** Herstellungsverfahren nach einem der Ansprüche 1 bis 9, **dadurch gekennzeichnet, dass** der Dotierstoff in den Flüssigkristall eine linksdrehende Schraubenlinie einführt.

**13.** Herstellungsverfahren nach einem der Ansprüche 1 bis 9, **dadurch gekennzeichnet, dass** die Entchiralisierungsbearbeitung eine Wärmebehandlung ist.

**14.** Herstellungsverfahren nach einem der Ansprüche 1 bis 9, **dadurch gekennzeichnet, dass** die Entchiralisierungsbearbeitung eine Bearbeitung durch optisches Beleuchten etwa mit einher Ultraviolettstrahlung oder mit sichtbarer Strahlung ist.

**15.** Herstellungsverfahren nach einem der vorhergehenden Ansprüche, **dadurch gekennzeichnet, dass** der Flüssigkristall kein Polymermaterial enthält.

**16.** Herstellungsverfahren nach einem der vorhergehenden Ansprüche, **dadurch gekennzeichnet, dass** nach dem Schritt (E2) des Anordnen des Flüssigkristallgemisches zwischen den zwei Substraten und vor dem Schritt (E3) der Entchiralisierungsbearbeitung das Verfahren einen Schritt (E'2) des Speicherns der Flüssigkristallstruktur mit größerer Verdrehung in den aktiven und inaktiven Zonen der Flüssigkristallzelle enthält, wobei dieser Speicherschritt unter Bewahrung der Zelle, wie sie ist, während eines gegebenen Zeitintervalls (t) ausgeführt wird.

**17.** Herstellungsverfahren nach Anspruch 16, **dadurch gekennzeichnet, dass** das gegebene Zeitintervall (t) des Schrittes (E'2) des Speichers der Flüssigkristallstruktur mit größerer Verdrehung im Bereich von 30 Minuten bis 24 Stunden liegt.

**18.** Herstellungsverfahren nach Anspruch 17, **dadurch gekennzeichnet, dass** währen des Speicherschrittes (E'2) die Temperatur des Flüssigkristalls im Bereich von 20 °C bis 40 °C gehalten wird.

**19.** Herstellungsverfahren nach einem der vorhergehenden Ansprüche, **dadurch gekennzeichnet, dass** nach dem Schritt (E2) des Anordnens des Flüssigkristallgemisches zwischen den zwei Substraten vor und/oder nach dem Schritt (E3) der Entchiralisierungsbearbeitung das Verfahren einen Schritt (E"2, E'3) des Auskühlens der Flüssigkristallzelle enthält.

**20.** Herstellungsverfahren nach Anspruch 19, **dadurch gekennzeichnet, dass** der vor dem Schritt (E3) der Entchiralisierungsbearbeitung ausgeführte Abkühlungschritt (E"2) bei einer Temperatur erfolgt, die größer oder gleich der Klärungstemperatur des Flüssigkristalls ist.

**21.** Herstellungsverfahren nach den Ansprüchen 16 und 20, **dadurch gekennzeichnet, dass** der Abkühlungsschritt (E"2) nach dem Schritt (E2) des Anordnen des Flüssigkristallgemisches zwischen den zwei. Substraten und vor dem Schritt (E'2) des Speicherns erfolgt.

**22.** Anzeigevorrichtung mit nematischem, Flüssigkristall, die gemäß dem Verfahren nach einem der vorhergehenden Ansprüche hergestellt ist, **dadurch gekennzeichnet, dass** sie eine Flüssigkristallstruktur enthält, die der Struktur mit stärkerer Drehung in den Zwischenräumen zwischen Pixeln und anderen inaktiven Zonen entspricht.

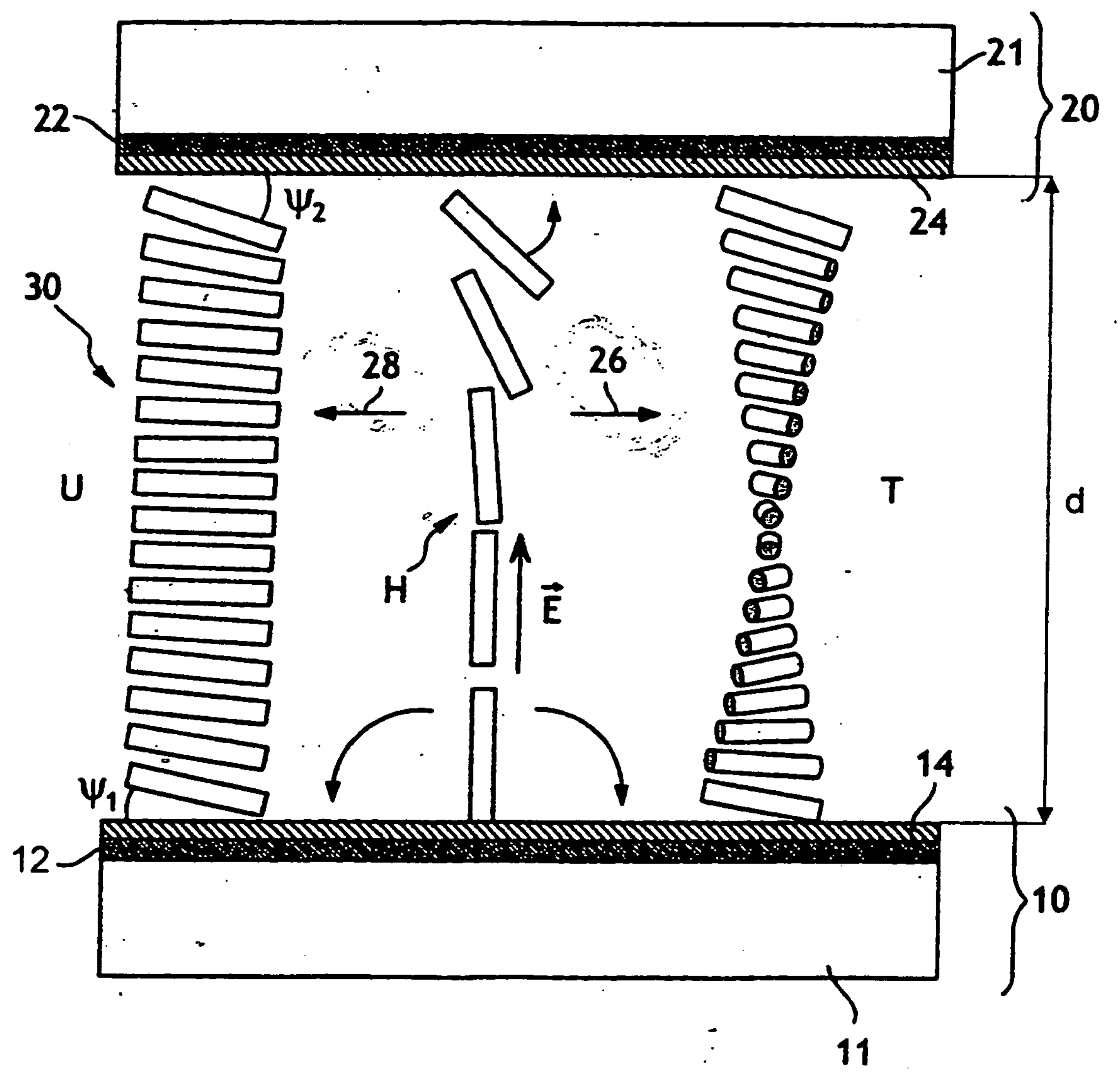


Fig. 1

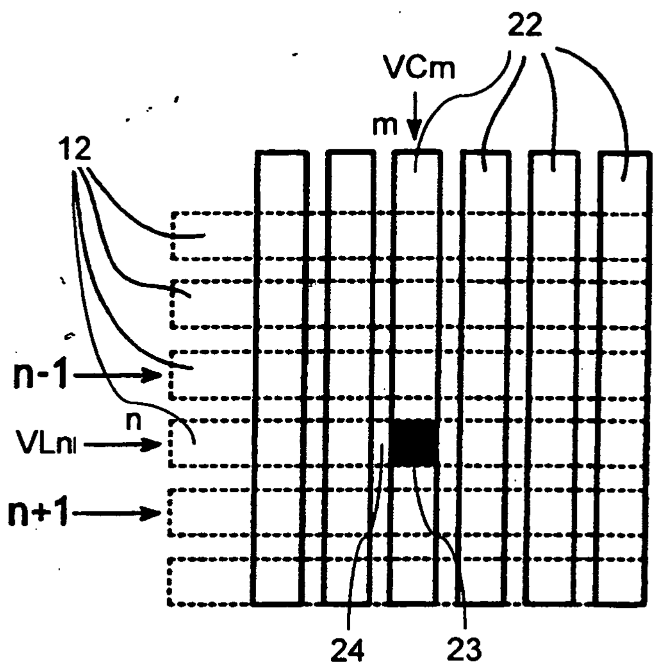


Fig. 2a

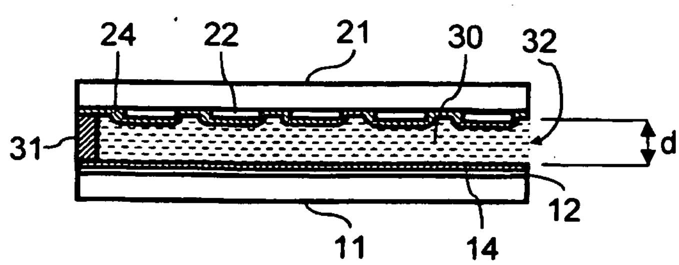


Fig. 2b

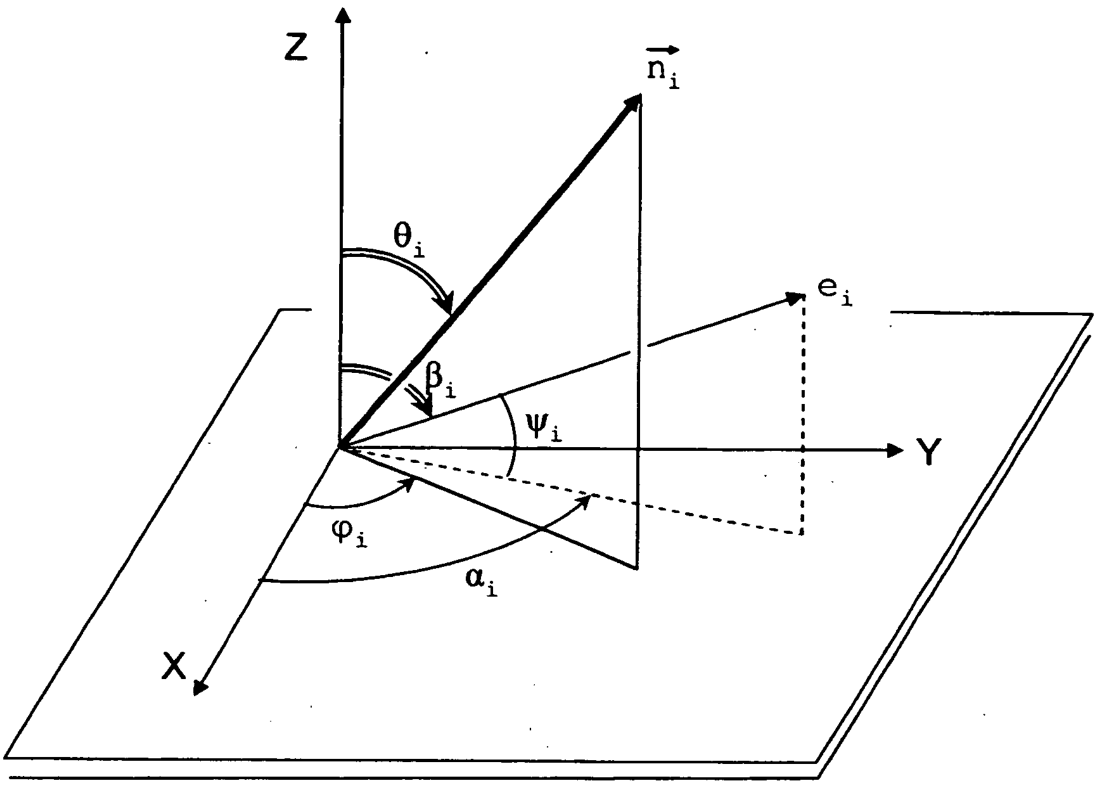
Z
$\vec{n_i}$
$\theta_i$
$e_i$
$\beta_i$
$\psi_i$
Y
$\varphi_i$
$\alpha_i$
X

Fig. 3

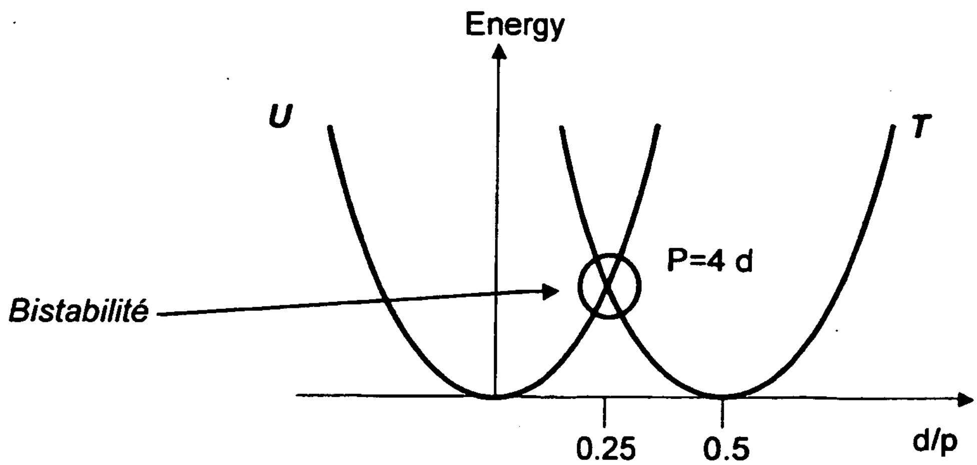
Energy
U
T
P=4 d
Bistabilité
0.25
0.5
d/p

Fig. 4

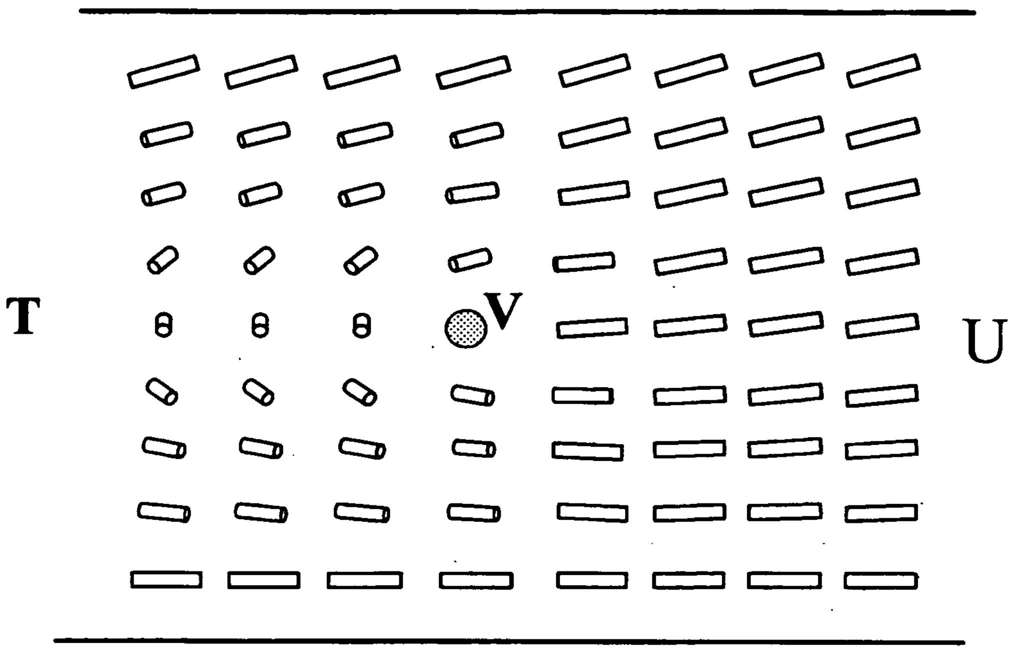


Fig. 5a

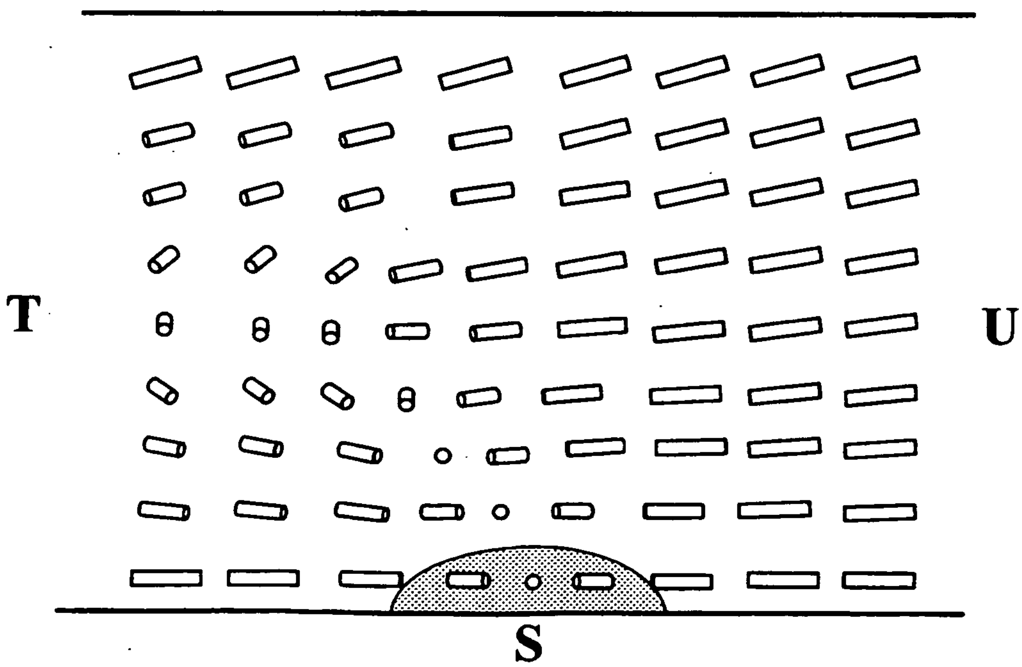


Fig. 5b

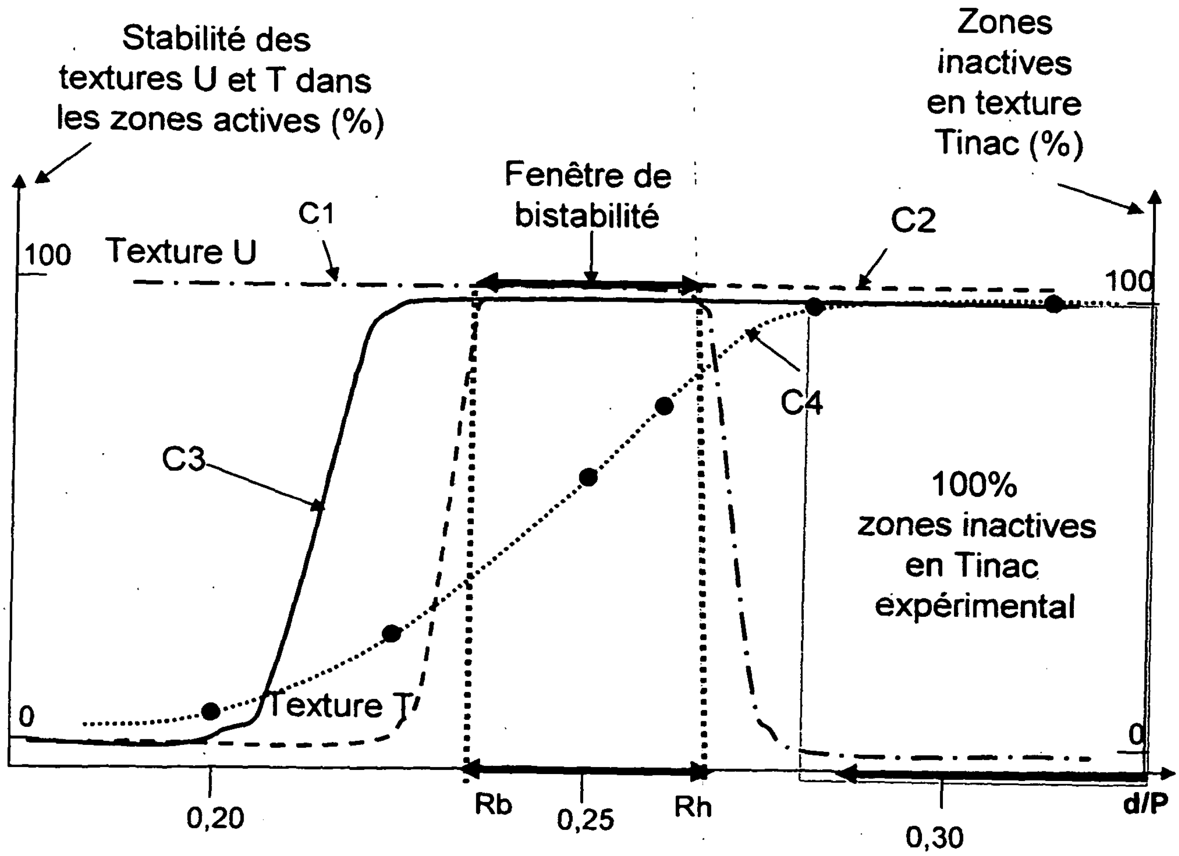
Stabilité des textures U et T dans les zones actives (%)
Zones inactives en texture Tinac (%)
Fenêtre de bistabilité
C1
C2
100
Texture U
100
C3
C4
100% zones inactives en Tinac expérimental
0
Texture T
0
0,20
Rb
0,25
Rh
0,30
d/P

Fig. 6

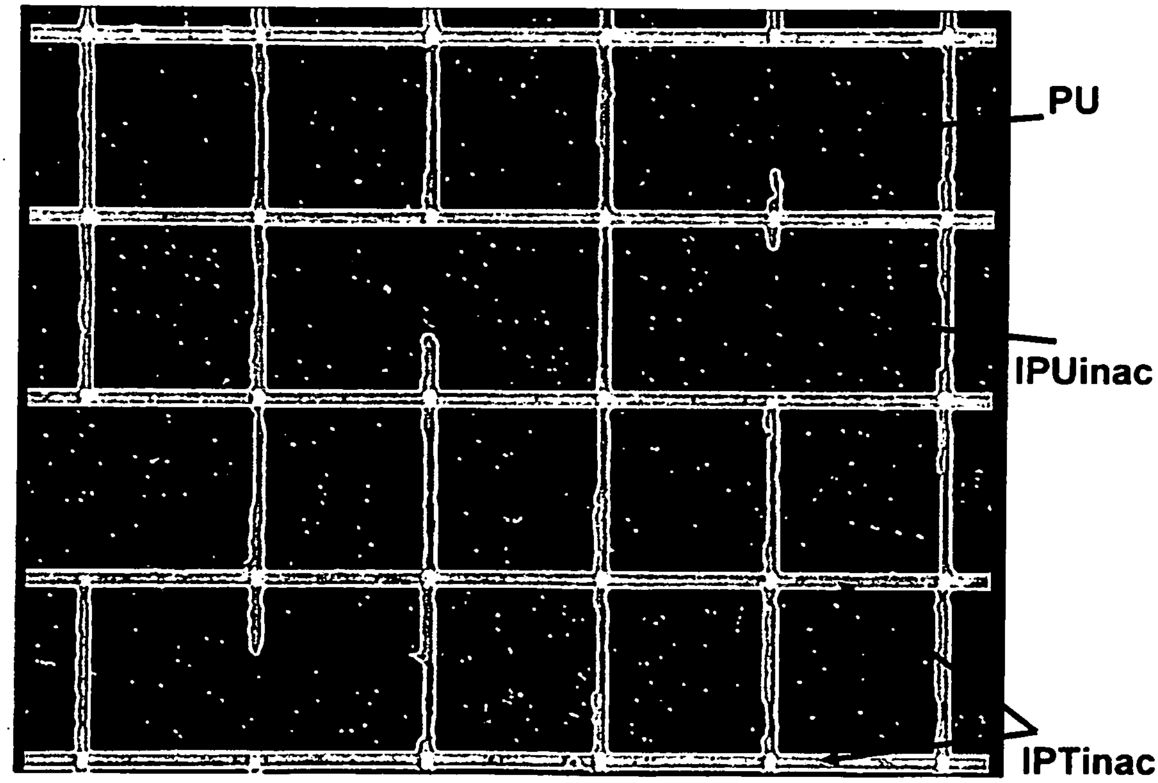


Fig. 7

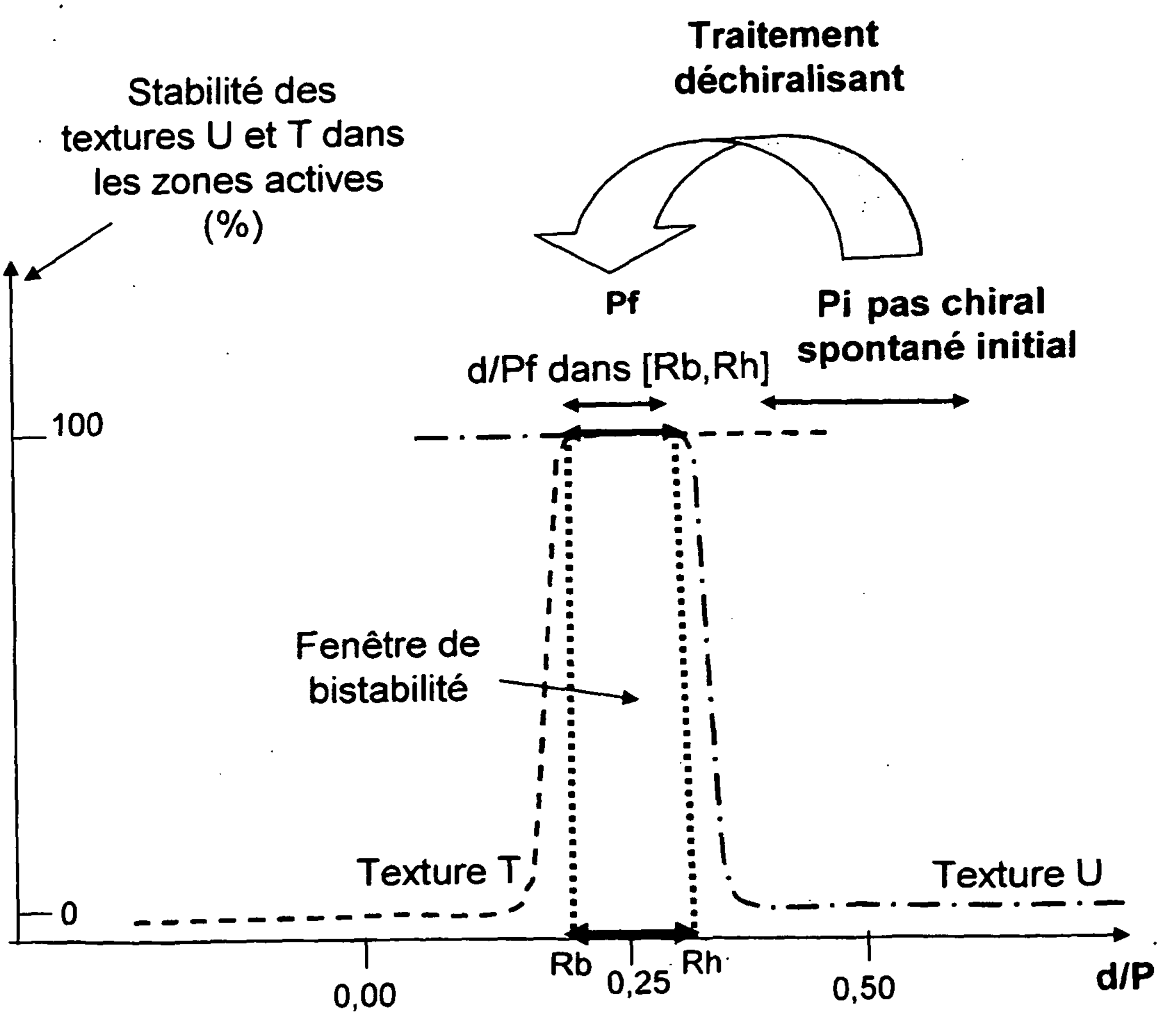
Traitement
déchiralisant
Stabilité des
textures U et T dans
les zones actives
(%)
Pf
Pi pas chiral
spontané initial
d/Pf dans [Rb,Rh]
100
Fenêtre de
bistabilité
Texture T
Texture U
0
Rb
Rh
0,00
0,25
0,50
d/P

Fig. 8

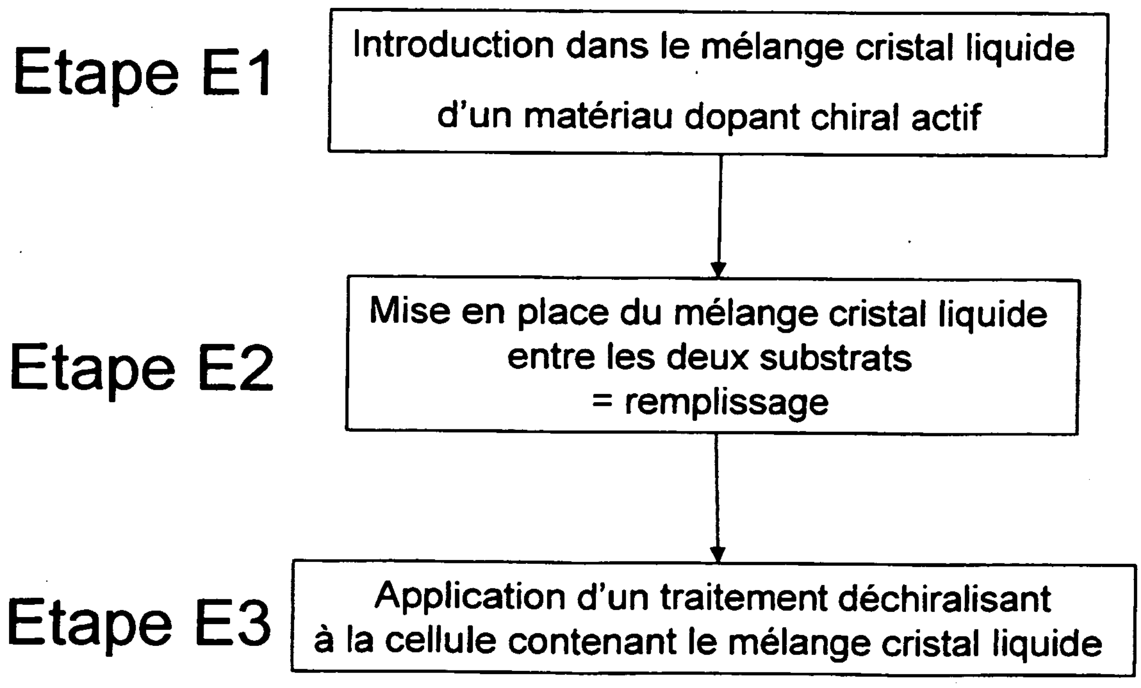
Etape E1
Introduction dans le mélange cristal liquide d'un matériau dopant chiral actif
Etape E2
Mise en place du mélange cristal liquide entre les deux substrats = remplissage
Etape E3
Application d'un traitement déchiralisant à la cellule contenant le mélange cristal liquide

Fig. 9

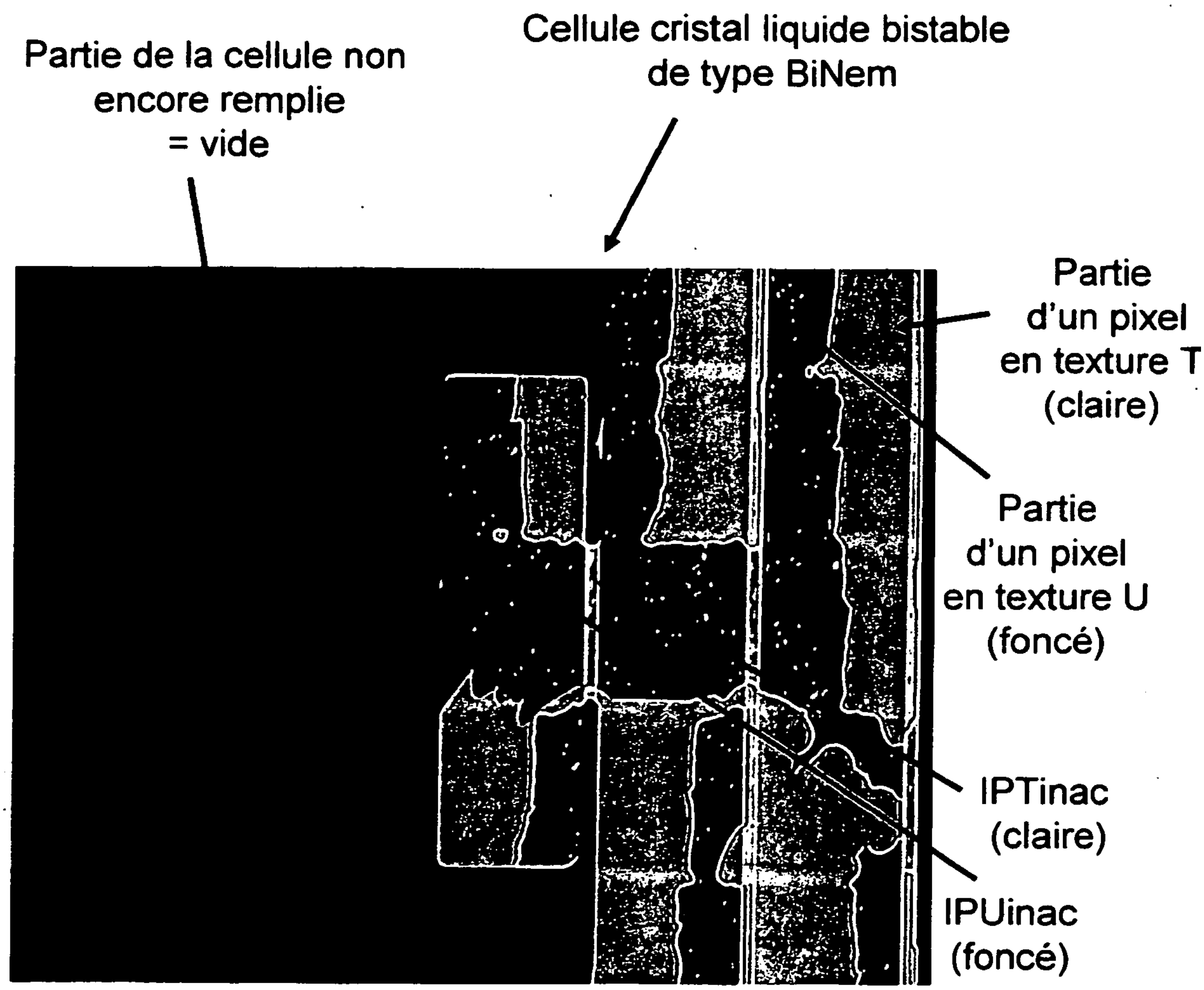
Partie de la cellule non encore remplie = vide
Cellule cristal liquide bistable de type BiNem
Partie d'un pixel en texture T (claire)
Partie d'un pixel en texture U (foncé)
IPTinac (claire)
IPUinac (foncé)

Fig. 10

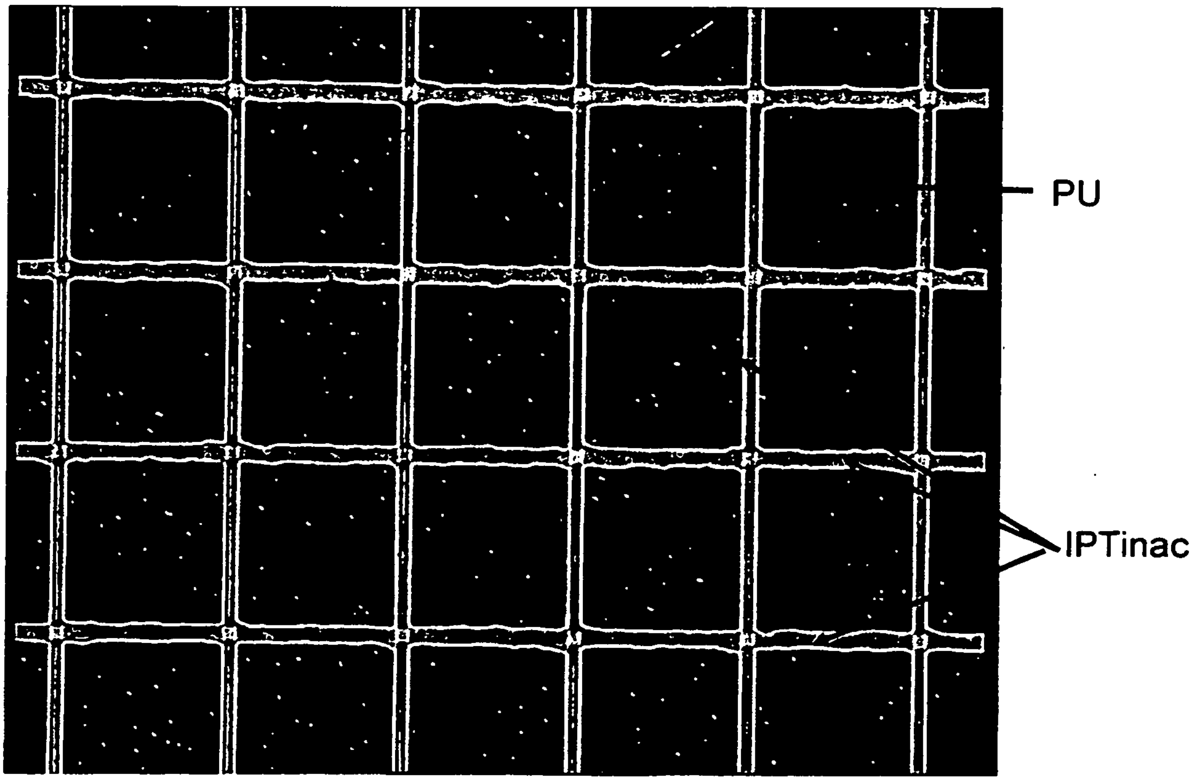


Fig. 11

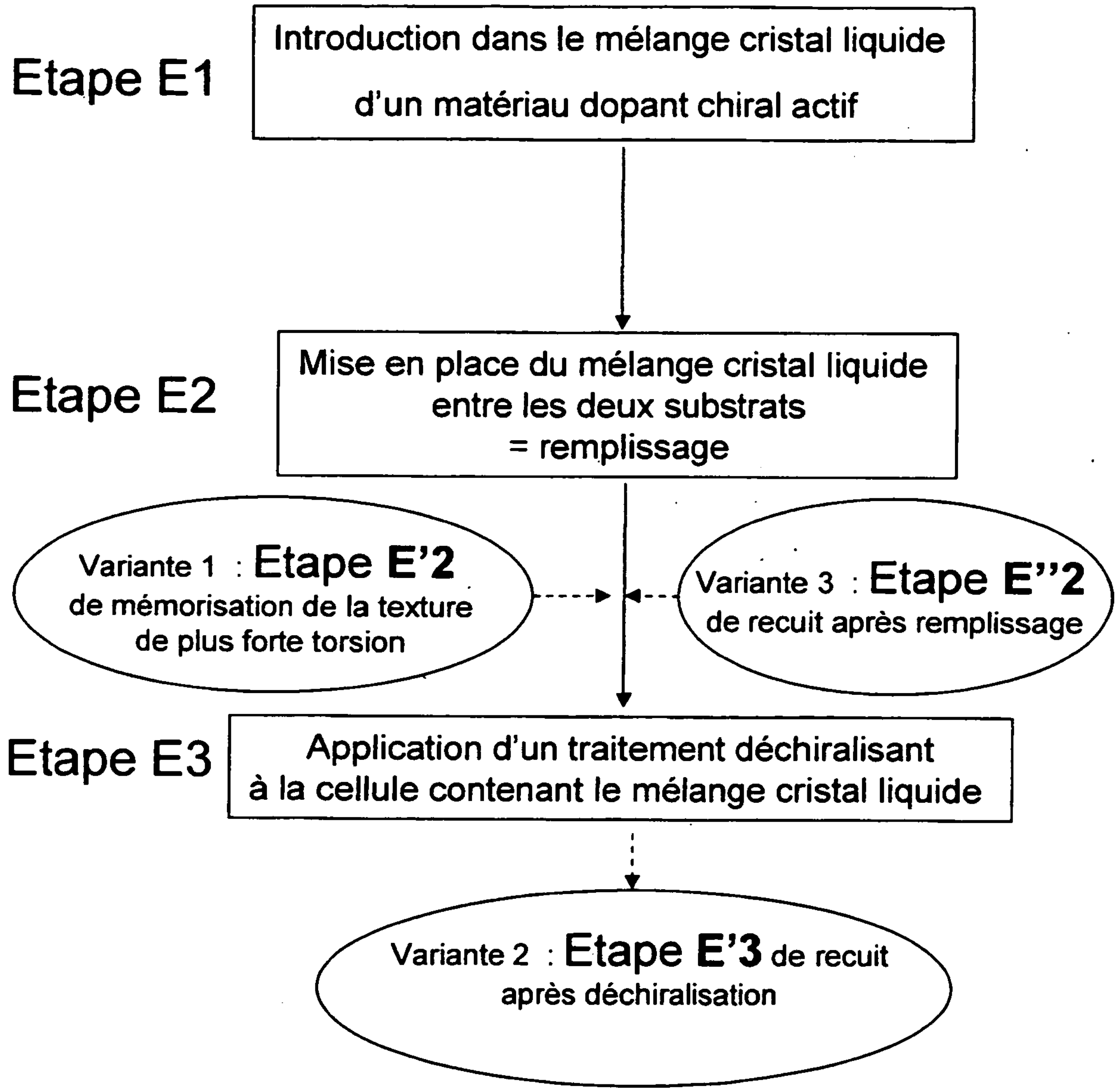
Etape E1
Introduction dans le mélange cristal liquide d'un matériau dopant chiral actif
Etape E2
Mise en place du mélange cristal liquide entre les deux substrats = remplissage
Variante 1 : Etape E'2 de mémorisation de la texture de plus forte torsion
Variante 3 : Etape E''2 de recuit après remplissage
Etape E3
Application d'un traitement déchiralisant à la cellule contenant le mélange cristal liquide
Variante 2 : Etape E'3 de recuit après déchiralisation

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6327017 B
- US 7067180 B
- EP 1565784 A
- US 6061107 A
- US 10557721 B
- US 7115307 B


### Littérature non-brevet citée dans la description


- **I.Dozov et al.** recent improvements of bistable nematic displays switched by anchoring breaking (BiNem). *proc. SID 2001,* 2001, 224-227
- **P. Martinot-lagarde et al.** *SPIE,* 2003, vol. 5003, 25-34
- **C.Chien et al.** Multicolor reflective Cholesteric display. *Proc. SID,* vol. 95, 169-171
- **D. Demus ; J. Goody ; G.W. Gray ; H.W. Spiess ; V. Vill.** Handbook of Liquid Crystals. WILEY-VCH, vol. 2A, 347
- **L.V. Chepeleva et al.** photochemical transformations of 2-arylidene-menthanones-chiral dopants for liquid crystalline systems. *SPIE proceeding,* 2003, vol. 5257, 71-76